# EUROPÄISCHE PATENTSCHRIFT

(11) **EP 3 475 724 B1**
(45) Veröffentlichungstag und Bekanntmachung des Hinweises auf die Patenterteilung: **08.04.2026**
(21) Anmeldenummer: 17736897.4
(22) Anmeldetag: 27.06.2017
(51) Int. Cl.: B60R 25/24, G01S 5/02, G07C 9/00

(54) **VERFAHREN UND SYSTEM ZUM ERFASSEN EINER RELATIVPOSITION EINES MOBILEN ENDGERÄTS IN BEZUG AUF EIN FAHRZEUG**
METHOD AND SYSTEM FOR SENSING A POSITION OF A MOBILE TERMINAL RELATIVE TO A VEHICLE
PROCÉDÉ ET SYSTÈME DE DÉTECTION D'UNE POSITION RELATIVE D'UN TERMINAL MOBILE PAR RAPPORT À UN VÉHICULE

(30) Priorität: 27.06.2016 DE 102016111706
(43) Veröffentlichungstag der Anmeldung: 01.05.2019
(73) Patentinhaber: HELLA GmbH & Co. KGaA, 59552 Lippstadt (DE); Volkswagen Aktiengesellschaft, 38440 Wolfsburg (DE)
(72) Erfinder: BRÜCKNER, Claus-Peter, 38104 Braunschweig (DE); ETTE, Bernd, 38442 Wolfsburg (DE); WEGHAUS, Ludger, 59556 Lippstadt (DE); CURKIN, Roman, 59557 Lippstadt (DE)
(74) Vertreter: 2SPL Patentanwälte PartG mbB
(86) Internationale Anmeldenummer: PCT/EP2017/065801
(87) Internationale Veröffentlichungsnummer: WO 2018/002019

(56) Entgegenhaltungen:
- EP-A2- 2 246 226
- DE-A1- 10 046 571
- DE-A1- 102009 038 580
- DE-A1- 102009 038 580
- DE-A1- 102012 212 612
- DE-A1- 102012 212 612
- US-A1- 2015 061 856
- US-A1- 2015 148 989
- US-A1- 2016 075 307

## Beschreibung

Die Erfindung betrifft ein Verfahren zum Erfassen einer Relativposition eines mobilen Endgeräts in Bezug auf ein Fahrzeug und ein System zum Erfassen einer Relativposition eines mobilen Endgeräts in Bezug auf ein Fahrzeug.

Bei modernen Fahrzeugen können mobile Endgeräte, wie beispielsweise Smartphones, bereits dazu eingesetzt werden, um Fahrzeugtüren zu verriegeln oder zu entriegeln. Wie bei der Verwendung von gewöhnlichen Fahrzeugschlüsseln, besteht jedoch auch bei der Verwendung von mobilen Endgeräten die Gefahr, dass sich das mobile Endgerät durch eine Unachtsamkeit des Benutzers während der Verriegelung des Fahrzeugs mittels einer anderen Einrichtung im Fahrzeug befindet und somit eingeschlossen wird.

Es sind bereits passive Fahrzeugzutrittssysteme bekannt, welche die Position eines mobilen Endgeräts erfassen, um zu überwachen, ob sich das mobile Endgerät während der Einleitung eines Verriegelungsvorgangs durch den Benutzer noch im Fahrzeug befindet.

Stellt ein passives Fahrzeugzutrittssystem fest, dass das mobile Endgerät in dem Fahrzeug vergessen wurde, werden Maßnahmen eingeleitet, welche verhindern, dass das mobile Endgerät eingeschlossen wird. Beispielsweise kann der Benutzer durch ein akustisches oder optisches Signal während des Verriegelungsversuchs darauf hingewiesen werden, dass sich das mobile Endgerät noch im Fahrzeug befindet. Zusätzlich kann die Verriegelung abgebrochen werden.

Zur Umsetzung der beschrieben Funktion ist es notwendig die Relativposition eines mobilen Endgeräts in Bezug auf ein Fahrzeug zu erfassen.

Die Druckschrift DE 10 2004 024 890 A1 schlägt eine Vorrichtung zum Erfassen der Lage eines Objektes im Raum vor, wobei ein Magnetfeldmodulatormodul ein zeitlich und räumlich variierendes Magnetfeld erzeugt, welches von einem Sensormodul erfasst wird. Das von dem Sensormodul erzeugte Messsignal wird von einer Auswerteeinheit zur Ermittlung der Lage des Objektes im Raum ausgewertet.

Das Dokument DE 10 2009 038 580 A1 offenbart ein Verfahren zur Erfassung eines in einem Fahrzeug zurückgelassenen Mobilgeräts, wobei zwischen dem Mobilgerät und dem Fahrzeug ein Signal per Funk übertragen wird. Zum Erfassen, ob das Mobilgerät in dem Fahrzeug zurückgelassen worden ist, wird die Feldstärke des Signals beim Aussteigen eines Insassen aus dem Fahrzeug erfasst und ausgewertet.

Darüber hinaus ist aus der Druckschrift DE 10 2012 212 612 A1 ein Verfahren zum Bestimmen eines Aufenthaltsortes eines Benutzers bezogen auf ein Fahrzeug bekannt, wobei der Benutzer ein mobiles Endgerät mitführt. Das Erkennen eines Ein- beziehungsweise Aussteigevorgangs des Benutzers kann auf Daten von Sensoren des mobilen Endgeräts und/oder Daten von Sensoren des Fahrzeugs basieren.

Ferner ist aus der Druckschrift EP 2 246 226 A2 bekannt, dass ein Fahrzeug mehrere Suchsignale nutzen kann um einen Schlüssel zu lokalisieren, eines für eine Suche innerhalb des Fahrzeugs und eines für eine Suche außerhalb des Fahrzeugs.

Aus US 2015/0061856 A1 ist bekannt, Messungen eines Mobilgeräts, etwa Messungen eines Beschleunigungssensors oder Messungen bezüglich einer Benutzereingabe, zu verwenden, um herauszufinden, wo sich ein Mobilgerät relativ zu einem Fahrzeug befindet.

Die bekannten Lösungen sind jedoch nicht geeignet, die Relativpostion eines mobilen Endgeräts in Bezug auf ein Fahrzeug ausreichend präzise zu bestimmen. Eine verlässliche Feststellung darüber, ob ein mobiles Endgerät beim Verlassen des Fahrzeugs in dem Fahrzeug zurückgelassen worden ist, kann somit nicht erfolgen.

Der Erfindung liegt nun die Aufgabe zugrunde, die Relativposition eines mobilen Endgeräts in Bezug auf ein Fahrzeug mit einer höheren Genauigkeit zu erfassen, sodass verlässlich festgestellt werden kann, ob das mobile Endgerät beim Verlassen des Fahrzeugs in dem Fahrzeug zurückgelassen worden ist, ob sich das mobile Endgerät nach einem Einsteigen einer Person in das Fahrzeug in dem Fahrzeug befindet, und/oder ob sich das mobile Endgerät bei einem Losfahren des Fahrzeugs oder bei einem Starten des Motors des Fahrzeugs in dem Fahrzeug befindet.

Diese Aufgabe wird gelöst durch ein Verfahren gemäß Anspruch 1 beziehungsweise ein System gemäß Anspruch 15.

Gemäß einem ersten Aspekt schaffen Ausführungsbeispiele ein Verfahren zum Erfassen einer Relativposition eines mobilen Endgeräts in Bezug auf ein Fahrzeug. Das Verfahren umfasst Bereitstellen von mehreren Auswertesignalen. Die Auswertesignale werden durch eine Positionsänderung des mobilen Endgeräts verändert. Zudem umfasst das Verfahren Feststellen eines Ereignisses an dem Fahrzeug. Das Verfahren umfasst des Weiteren Auswerten der mehreren bereitgestellten Auswertesignale zum Erfassen der Relativposition des mobilen Endgeräts in Bezug auf das Fahrzeug ansprechend auf das Feststellen des Ereignisses an dem Fahrzeug.

Das erfindungsgemäße Verfahren hat den Vorteil, dass die Positionsbestimmung beziehungsweise die Ortung des mobilen Endgeräts nicht nur lediglich auf einem Auswertesignal basiert und somit nicht von der Genauigkeit des einen Auswertesignals abhängig ist. Durch die Bereitstellung und Auswertung von mehreren Auswertesignalen, welche durch eine Positionsänderung des mobilen Endgeräts veränderbar sind, kann die Relativposition des mobilen Endgeräts in Bezug auf das Fahrzeug folglich mit einer höheren Genauigkeit erfasst werden. Dies erlaubt eine verlässliche Feststellung, ob ein mobiles Endgerät beim Verlassen des Fahrzeugs in dem Fahrzeug zurückgelassen worden ist.

Dadurch, dass das Auswerten der mehreren bereitgestellten Auswertesignale ansprechend auf das Feststellen des Ereignisses an dem Fahrzeug durchgeführt wird, kann zudem ein kontinuierliches Erfassen der Relativposition des mobilen Endgeräts in Bezug auf das Fahrzeug entfallen. Hierdurch kann eine kontinuierliche Überwachung der Relativposition des mobilen Endgeräts vermieden werden, wodurch ein Datenschutz bei der Durchführung des Verfahrens erhöht werden kann. Dadurch kann des Weiteren eine Benutzerakzeptanz des Verfahrens erhöht werden. Ferner kann dadurch, dass das Auswerten der mehreren bereitgestellten Auswertesignale ansprechend auf das Feststellen des Ereignisses an dem Fahrzeug durchgeführt wird, das Verfahren energieeffizienter durchgeführt werden, da eine benötigte Rechenleistung, beispielsweise eines Prozessors, zum Auswerten der mehreren bereitgestellten Auswertesignale nicht kontinuierlich sondern lediglich ansprechend auf Erfassen des Ereignisses abgerufen wird.

Die mehreren Auswertesignale können durch das mobile Endgerät und/oder durch das Fahrzeug bereitgestellt werden. Ferner können die mehreren Auswertesignale auf der Basis mehrerer Sensorsignale eines einzigen Sensors des mobilen Endgeräts oder des Fahrzeugs bereitgestellt werden. Alternativ oder zusätzlich können die mehreren Auswertesignale auch auf der Basis von Sensorsignalen mehrerer Sensoren des mobilen Endgeräts und/oder des Fahrzeugs bereitgestellt werden. Beispielsweise werden zumindest ein Auswertesignal von dem mobilen Endgerät und zumindest ein weiteres Auswertesignal durch das Fahrzeug bereitgestellt oder es werden alle Auswertesignale von dem mobilen Endgerät oder dem Fahrzeug bereitgestellt. Die Auswertesignale können jeweils eine Information umfassen oder repräsentieren, welche durch die Positionsänderung des mobilen Endgeräts verändert wird.

Zudem kann das Bereitstellen der mehreren Auswertesignale ein Aussenden von zumindest einem Auswertesignal von dem mobilen Endgerät an das Fahrzeug über ein drahtloses Kommunikationsnetzwerk und/oder ein Aussenden von zumindest einem Auswertesignal von dem Fahrzeug an das mobile Endgerät über das drahtloses Kommunikationsnetzwerk umfassen. Das drahtlose Kommunikationsnetzwerk kann ein Bluetooth-Kommunikationsnetzwerk, ein Bluetooth-Low-Energy-Kommunikationsnetzwerk, ein Nahfeldkommunikationsnetzwerk, ein Wireless Local Area Network (WLAN)-Kommunikationsnetzwerk, eine Ultra Wideband (UWB) Funkverbindung oder ein Mobilfunknetzwerk sein. Ferner können das mobile Endgerät und das Fahrzeug jeweils eine drahtlose Kommunikationsschnittstelle aufweisen, welche zur Kommunikation über das drahtlose Kommunikationsnetzwerk ausgebildet ist. Das erfindungsgemäße Verfahren kann ferner ein Aussenden einer Aufforderung zum Bereitstellen der Auswertesignale über das drahtlose Kommunikationsnetzwerk durch das mobile Endgerät und/oder das Fahrzeug umfassen. Zudem können die mehreren Auswertesignale ansprechend auf ein Empfangen der Aufforderung durch das mobile Endgerät und/oder das Fahrzeug bereitgestellt werden. Beispielsweise wird die Aufforderung ansprechend auf das Feststellen des Ereignisses ausgesendet.

Das Auswerten der mehreren bereitgestellten Auswertesignale kann durch das Fahrzeug und/oder durch das mobile Endgerät erfolgen. Hierzu kann das Fahrzeug und/oder das mobile Endgerät einen Prozessor oder einen Kontroller aufweisen, welcher zum Auswerten der mehreren bereitgestellten Auswertesignale eingerichtet ist. Beispielsweise ist der Prozessor eine Central Processing Unit (CPU) eines Bordcomputers des Fahrzeugs oder ist der Prozessor eine CPU des mobilen Endgeräts. Bevorzugt erfolgt das Auswerten der mehreren bereitgestellten Auswertesignale durch das Fahrzeug.

Die Relativposition des mobilen Endgeräts in Bezug auf das Fahrzeug kann angeben, ob sich das mobile Endgerät innerhalb oder in einem Innenraum des Fahrzeugs oder außerhalb des Fahrzeugs befindet. Beispielsweise ist der Innenraum des Fahrzeugs eine Fahrgastzelle des Fahrzeugs des Fahrzeugs und gibt die Relativposition an, ob sich das mobile Endgerät in der Fahrgastzelle des Fahrzeugs oder außerhalb der Fahrgastzelle des Fahrzeugs befindet. Ferner kann die Relativposition des mobilen Endgeräts in Bezug auf das Fahrzeug Koordinaten des mobilen Endgeräts in einem durch das Fahrzeug definierten, beispielsweise kartesischen, Koordinatensystem umfassen. Beispielsweise wird das Koordinatensystem durch ausgewählte Punkte eines Rahmens des Fahrzeugs definiert.

Das Verfahren kann ferner ein Anzeigen eine Hinweises auf die erfasste Relativposition des mobilen Endgeräts in Bezug auf das Fahrzeug umfassen. Zum Anzeigen des Hinweises kann das mobile Endgerät und/oder das Fahrzeug eine optische Anzeigeeinrichtung, wie einen Bildschirm oder eine lichtemittierende Diode (LED), einen akustischen Signalgeber, wie einen Lautsprecher, und/oder einen Vibrationsalarm umfassen. Beispielsweise wird der Hinweis angezeigt, wenn sich das mobile Endgerät nach dem Verlassen oder während des Verlassens des Fahrzeugs innerhalb des Fahrzeugs befindet, oder wird der Hinweis angezeigt, wenn sich das mobile Endgerät bei einem Starten des Motors des Fahrzeugs außerhalb des Fahrzeugs, beispielsweise auf einem Dach des Fahrzeugs oder auf einer Frontscheibe des Fahrzeugs, befindet.

Das Ereignis an dem Fahrzeug kann eines der folgenden Ereignisse sein: ein Öffnen oder ein Schließen einer Tür, einer Klappe, eines Fensters oder einer anderen Öffnung des Fahrzeugs, eine Betätigung einer Verriegelungseinrichtung des Fahrzeugs, eine Betätigung eines Zündschlosses des Fahrzeugs oder eine Betätigung einer Anlassereinrichtung des Fahrzeugs. Das Ereignis kann mittels des Bordcomputers des Fahrzeugs erfasst werden. Hierzu kann der Bordcomputer mit einem Türschloss der Tür, dem Zündschloss des Fahrzeugs und/oder der Anlassereinrichtung des Fahrzeugs signalleitend verbunden sein.

Das Öffnen oder das Schließen der Tür, der Klappe, des Fensters oder der anderen Öffnung des Fahrzeugs kann durch Betätigen einer Betätigungseinrichtung, beispielsweise eines Türgriffs, des Fahrzeugs, mittels einer Fernbedienung, beispielsweise mittels eines Funkschlüssels, des Fahrzeugs und/oder mittels des mobilen Endgeräts initiiert werden. Die Betätigung der Verriegelungseinrichtung kann ein Entriegeln oder ein Verriegeln der Verriegelungseinrichtung umfassen. Beispielsweise wir zum Entriegeln oder Verriegeln der Verriegelungseinrichtung ein Fahrzeugschlüssel in ein Türschloss des Fahrzeugs eingeführt und/oder wird das Entriegeln oder Verriegeln der Verriegelungseinrichtung mittels der Fernbedienung des Fahrzeugs und/oder mittels des mobilen Endgeräts initiiert. Zudem kann die Betätigung des Zündschlosses ein Drehen eines in das Zündschloss eingeführten Fahrzeugschlüssels, beispielsweise zum Starten des Motors des Fahrzeugs, umfassen und/oder kann die Betätigung des Zündschlosses mittels der Fernbedienung des Fahrzeugs und/oder mittels des mobilen Endgeräts erfolgen. Ferner kann die Betätigung der Anlassereinrichtung ein Drücken einer Start-/Stop-Taste des Fahrzeugs zum Starten oder Stoppen des Motors des Fahrzeugs umfassen und/oder kann die Betätigung der Anlassereinrichtung mittels der Fernbedienung des Fahrzeugs und/oder mittels des mobilen Endgeräts erfolgen.

Das Bereitstellen der mehreren Auswertesignale, welche durch eine Positionsänderung des mobilen Endgeräts veränderbar sind, kann das Erfassen von mehreren Signalen, welche durch eine Positionsänderung des mobilen Endgeräts veränderbar sind, umfassen. Das Erfassen der mehreren Signale, welche durch eine Positionsänderung des mobilen Endgeräts veränderbar sind, kann durch das Fahrzeug oder durch das mobile Endgerät erfolgen. Wenn eines oder mehrere Signale, welche durch eine Positionsänderung des mobilen Endgeräts veränderbar sind, durch das Fahrzeug erfasst werden, kann eine Auswertung der Signale unmittelbar nach der Signalbereitstellung erfolgen. Vorzugsweise umfasst das Fahrzeug eine oder mehrere Sensoreinheiten, welche dazu eingerichtet sind, ein oder mehrere Signale, welche durch eine Positionsänderung des mobilen Endgeräts veränderbar sind, zu erfassen. Die eine oder die mehreren Sensoreinheiten sind vorzugsweise mit einer Auswerteeinrichtung des Fahrzeugs signalleitend verbunden, wobei die Auswerteeinrichtung dazu eingerichtet ist, die mehreren bereitgestellten Auswertesignale zum Erfassen der Relativposition des mobilen Endgeräts in Bezug auf das Fahrzeug auszuwerten. Zur Erfassung eines oder mehrerer Signale, welche durch eine Positionsänderung des mobilen Endgeräts veränderbar sind, kann das mobile Endgerät eine oder mehrere Sensoreinheiten umfassen, welche dazu eingerichtet sind, ein oder mehrere Signale, welche durch eine Positionsänderung des mobilen Endgeräts veränderbar sind, zu erfassen. Da regelmäßig nicht das erfasste Signal, sondern Eigenschaften des erfassten Signals, wie die Signalstärke beziehungsweise die Signalqualität, zum Erfassen der Relativposition des mobilen Endgeräts in Bezug auf das Fahrzeug relevant sind, kann das Verfahren den Schritt des Erzeugens der mehreren Auswertesignale, welche durch eine Positionsänderung des mobilen Endgeräts veränderbar sind, aus den mehreren erfassten Signalen, welche durch eine Positionsänderung des mobilen Endgeräts veränderbar sind, umfassen. Damit die von dem mobilen Endgerät erzeugten Auswertesignale von dem Fahrzeug ausgewertet werden können, kann das Verfahren den Schritt des Sendens des einen oder der mehreren erzeugten Auswertesignale, welche durch eine Positionsänderung des mobilen Endgeräts veränderbar sind, von dem mobilen Endgerät an das Fahrzeug umfassen. Hierzu weisen das mobile Endgerät und das Fahrzeug vorzugsweise jeweils eine Kommunikationseinrichtung, wie die drahtlose Kommunikationsschnittstelle, auf, mittels welchen die bereitgestellten Signalwerte übertragen werden können.

Bei manchen Ausführungsbeispielen werden die erzeugten Auswertesignale in einem Ringspeicher zwischengespeichert. Zudem werden lediglich Signaldaten einer ausgewählten Zeitspanne zur Auswertung zwischengespeichert. Durch das Speichern der Signaldaten in dem Ringspeicher kann der Vorteil erreicht werden, dass eine Größe eines zum Zwischenspeichern der Signaldaten verwendeten Speichers reduziert werden kann. Hierdurch kann das Verfahren kostengünstiger durchgeführt werden. Die Signaldaten können Auswertesignale und/oder erfasste Signale sein. Beispielsweise können in dem Ringspeicher Daten kontinuierlich für einen vorbestimmten Zeitraum gespeichert werden. Zudem können die gespeicherten Daten nach dem Ablaufen einer vorgegebenen Zeit wieder überschrieben werden, um den durch die gespeicherten Daten in dem Ringspeicher belegten Speicherplatz für neue Daten freizugeben. Beispielsweise werden in dem Ringspeicher Signaldaten der letzten 15 Sekunden, der letzten 30 Sekunden, der letzten Minute, der letzten 5 Minuten oder der letzten 15 Minuten gespeichert.

Das Erzeugen der mehreren Auswertesignale, welche durch eine Positionsänderung des mobilen Endgeräts veränderbar sind, aus den mehreren erfassten Signalen, welche durch eine Positionsänderung des mobilen Endgeräts veränderbar sind, kann das Messen der Signalstärke eines oder mehrerer erfasster Signale, welche durch eine Positionsänderung des mobilen Endgeräts veränderbar sind, umfassen. Die Signalstärke verändert sich mit dem Abstand zwischen dem Sender und dem Empfänger. Die Auswertung der Signalstärke eines Kommunikationssignals zwischen dem Fahrzeug und dem mobilen Endgerät eignet sich beispielsweise in besonderem Maße, um die Relativposition des mobilen Endgeräts in Bezug auf das Fahrzeug zu erfassen. Zum Auswerten einer Signalentwicklung kann die zeitliche Veränderung eines oder mehrerer erfasster Signale, welche durch eine Positionsänderung des mobilen Endgeräts veränderbar sind, erfasst werden. Das Erzeugen der mehreren Auswertesignale, welche durch eine Positionsänderung des mobilen Endgeräts veränderbar sind, aus den mehreren erfassten Signalen, welche durch eine Positionsänderung des mobilen Endgeräts veränderbar sind, kann außerdem das Speichern der erzeugten Auswertesignale, welche durch eine Positionsänderung des mobilen Endgeräts veränderbar sind, vorzugsweise in einem Ringspeicher, umfassen, wobei das Auswerten der mehreren bereitgestellten Auswertesignale vorzugsweise durch die Feststellung eines Ereignisses initiiert wird. Oftmals ist die Auswertung von Signaldaten notwendig, welche vor dem initiierenden Ereignis erfasst wurden, sodass das Verfahren vorzugsweise auch das Speichern eines oder der mehrerer Auswertesignale umfasst. Vorzugsweise handelt es sich bei dem Speichern der Auswertesignale um ein Zwischenspeichern in einem Ringspeicher, wobei lediglich Signaldaten einer ausgewählten Zeitspanne zur Auswertung zwischengespeichert werden. Die Zeitspanne erstreckt sich vorzugsweise von einem ersten Zeitpunkt vor der Betätigung einer Verriegelungseinrichtung des Fahrzeugs bis zu einem zweiten Zeitpunkt nach der Betätigung der Verriegelungseinrichtung des Fahrzeugs.

Die mehreren erfassten Signale, welche durch eine Positionsänderung des mobilen Endgeräts veränderbar sind, können ein Funksignal einer Kommunikationsverbindung zwischen dem mobilen Endgerät und dem Fahrzeug und/oder ein Mobilfunksignal des mobilen Endgeräts umfassen. Das Funksignal kann beispielsweise ein Bluetooth-Signal oder ein WLAN (Wireless Local Area Network) Signal sein. Das Verfahren kann das Erfassen der Feldstärkenveränderung der Bluetooth-Funkstrecke zwischen dem mobilen Endgerät und dem Fahrzeug und/oder das Erfassen der Feldstärkenveränderung des WLAN Signals umfassen. Die Feldstärke des Bluetooth-Signals reagiert direkt auf eine Abstandsveränderung zwischen dem Sender und dem Empfänger und eignet sich somit besonders zur Erfassung der Relativposition des mobilen Endgeräts in Bezug auf das Fahrzeug. Durch eine Erfassung der Veränderung der Feldstärke des Mobilfunksignals des mobilen Endgeräts kann abgeleitet werden, ob das mobile Endgerät das Fahrzeug verlassen hat, da die Fahrzeughülle eine Feldabschirmung und somit eine Feldveränderung verursacht. Alternativ oder zusätzlich können auch andere Signalparameter ausgewertet werden. Das Mobilfunksignal kann beispielsweise ein GSM (Global System for Mobile Communications) Signal, ein UMTS (Universal Mobile Telecommunications System) Signal oder ein LTE (Long Term Evolution) Signal sein. Das Signal wird vorzugsweise von einem Baseband Transceiver des mobilen Endgeräts erfasst.

Die mehreren erfassten Signale, welche durch eine Positionsänderung des mobilen Endgeräts veränderbar sind, können ein zur Ortung des mobilen Endgeräts mittels eines globalen Navigationssatellitensystems geeignetes Signal umfassen. Durch eine Erfassung der Veränderung des Navigationssignals kann abgeleitet werden, ob das mobile Endgerät das Fahrzeug verlassen hat, da die Fahrzeughülle eine Feldabschirmung und somit eine Feldveränderung verursacht. Beispielsweise kann die Anzahl der gefundenen Satelliten, deren Signalstärke und/oder andere Signalparameter ausgewertet werden. Das zur Ortung des mobilen Endgeräts mittels eines globalen Navigationssatellitensystems geeignete Signal kann ein GPRS (General Packet Radio Service) Signal sein. Das globale Navigationssatellitensystem kann das NAVSTAR GPS Satellitensystem, das GLONASS-Satellitensystem, das Galileo-Satellitensystem oder das Beidou-Satellitensystem sein. Das Signal wird vorzugsweise von einem Navigations-Satelliten-Transceiver des mobilen Endgeräts erfasst.

Die mehreren erfassten Signale, welche durch eine Positionsänderung des mobilen Endgeräts veränderbar sind, können ein von dem mobilen Endgerät gemessenes und von dem Erdmagnetfeld abhängiges Signal umfassen. Das Signal wird vorzugsweise von einem Magnetfeldsensor des mobilen Endgeräts erfasst. Durch eine Erfassung der Veränderung des Magnetfelds kann abgeleitet werden, ob das mobile Endgerät das Fahrzeug verlassen hat, da die Fahrzeughülle eine Feldabschirmung und somit eine Feldveränderung verursacht. Bei dem Auswerten der mehreren bereitgestellten Auswertesignale zum Erfassen der Relativposition des mobilen Endgeräts in Bezug auf das Fahrzeug können die Signalwerte zwischen dem Öffnen einer Tür des Fahrzeugs und dem Schließen oder Verriegeln der Tür des Fahrzeugs berücksichtigt werden. In dieser Zeitspanne würde das mobile Endgerät beim Verlassen des Fahrzeugs durch den Benutzer bewegt werden, wenn der Benutzer es nicht in dem Fahrzeug zurücklassen würde. Eine Auswertung der Auswertesignale während dieser Zeitspanne ist somit besonders bevorzugt.

Das Verfahren kann das Erfassen einer Bewegung des mobilen Endgeräts, vorzugsweise mittels eines Beschleunigungssensors des mobilen Endgeräts, umfassen. Die mehreren bereitgestellten Auswertesignale, welche durch eine Positionsänderung des mobilen Endgeräts veränderbar sind, können ein die Bewegung des mobilen Endgeräts betreffendes Signal umfassen. Durch eine Erfassung der Veränderung der Beschleunigungsmesswerte kann eine Bewegung des mobilen Endgeräts ermittelt werden, sodass abgeleitet werden kann, ob das mobile Endgerät das Fahrzeug verlassen hat. Alternativ oder zusätzlich können auch Bewegungsmuster oder Richtungsvektoren ausgewertet werden. Das Auswerten der mehreren bereitgestellten Auswertesignale umfasst dabei vorzugsweise das Identifizieren einer Ruhelage des mobilen Endgerätes. Eine mit einer sehr engen Toleranz definierte Bewegungslosigkeit und/oder unveränderte Lage des mobilen Endgeräts ist ein starkes Indiz dafür, dass das Mobilgerät im Fahrzeug liegt und sich nicht in der Hosen- oder Jackentasche eines Nutzers befindet. Dieser Ansatz kann darüber hinaus in sehr ähnlicher Weise für den Moment des Entriegelungswunsches genutzt werden, sodass der Schutz vor Relais Attacken gesteigert wird. Wenn erfasst wird, dass das mobile Endgerät sich nicht bewegt, kann eine Entriegelung des Fahrzeugs verhindert werden.

Es können außerdem ein oder mehrere Auswertesignale bereitgestellt werden, welche durch eine Positionsänderung des Fahrzeugs veränderbar sind. Das eine oder die mehreren bereitgestellten Auswertesignale, welche durch eine Positionsänderung des Fahrzeugs veränderbar sind, können zusätzlich zu den mehreren bereitgestellten Auswertesignalen, welche durch eine Positionsänderung des mobilen Endgeräts veränderbar sind, zum Erfassen der Relativposition des mobilen Endgeräts in Bezug auf das Fahrzeug ausgewertet werden. Insbesondere in Situationen, in welchen sich das Fahrzeug während des Verriegelungsvorgangs bewegt, wie beispielsweise auf einer Fähre oder einem Autozug, kann es zu einer Fehlinterpretation der Auswertesignale kommen, welche durch eine Positionsänderung des mobilen Endgeräts veränderbar sind. Zur Verringerung des Risikos einer solchen Fehlinterpretation kann ein oder können mehrere Auswertesignale bei der Erfassung der Relativposition des mobilen Endgeräts in Bezug auf das Fahrzeug berücksichtigt werden, welche durch eine Positionsänderung des Fahrzeugs veränderbar sind. Durch einen entsprechenden Signalvergleich kann erkannt werden, ob eine Positionsänderung des mobilen Endgeräts durch eine Positionsänderung des Fahrzeugs verursacht wurde.

Das Bereitstellen des einen oder der mehreren Auswertesignale, welche durch eine Positionsänderung des Fahrzeugs veränderbar sind, kann das Erfassen von einem oder mehreren Signalen, welche durch eine Positionsänderung des Fahrzeugs veränderbar sind, und das Erzeugen von einem oder mehreren Auswertesignalen aus dem einen oder den mehreren erfassten Signalen, welche durch eine Positionsänderung des Fahrzeugs veränderbar sind, umfassen. Das Verfahren kann ferner den Schritt des Erfassens einer Bewegung des Fahrzeugs umfassen, wobei das Erfassen der Bewegung des Fahrzeugs vorzugsweise mittels eines Beschleunigungssensors des Fahrzeugs erfolgt. Das eine oder die mehreren bereitgestellten Auswertesignale, welche durch eine Positionsänderung des Fahrzeugs veränderbar sind, können ein die Bewegung des Fahrzeugs betreffendes Signal umfassen. Bewegungen des mobilen Endgeräts, welche durch Fahrzeugeigenbewegungen bedingt werden, können somit zuverlässig erkannt und Falschaussagen über die Ruhelage des Mobilgerätes im Fahrzeug eliminiert werden.

Das Erzeugen des einen oder der mehreren Auswertesignale, welche durch eine Positionsänderung des Fahrzeugs veränderbar sind, aus dem einen oder den mehreren erfassten Signalen, welche durch eine Positionsänderung des Fahrzeugs veränderbar sind, kann das Messen der Signalstärke eines oder mehrerer erfasster Signale, welche durch eine Positionsänderung des Fahrzeugs veränderbar sind, umfassen. Die Auswertung der Signalstärke eines Kommunikationssignals zwischen dem Fahrzeug und dem mobilen Endgerät eignet sich beispielsweise in besonderem Maße, um die Relativposition des mobilen Endgeräts in Bezug auf das Fahrzeug zu erfassen. Zum Auswerten einer Signalentwicklung kann die zeitliche Veränderung eines oder mehrerer erfasster Signale, welche durch eine Positionsänderung des Fahrzeugs veränderbar sind, erfasst werden. Insbesondere kann bei der Auswertung eines Signals eines Navigationssatellitensystems auch die Anzahl der georteten Satelliten berücksichtigt werden. Darüber hinaus können neben der Signalstärke auch andere Übertragungsparameter gemessen oder erfasst werden, wie beispielsweise die Fehlerrate bei der Signalübertragung.

Das Auswerten der mehreren bereitgestellten Auswertesignale kann das Vergleichen der zeitlichen Veränderung der Beschleunigungsamplitude des mobilen Endgeräts und des Fahrzeugs umfassen. Durch das Vergleichen der Veränderungen der Beschleunigungsamplitude des mobilen Endgeräts und des Fahrzeugs kann festgestellt werden, ob das mobile Endgerät durch eine Fahrzeugeigenbewegung beschleunigt wurde, welche auf das mobile Endgerät übertragen worden ist. Durch das Vergleichen der Veränderungen der Beschleunigungsamplitude des mobilen Endgeräts und des Fahrzeugs können Fehlinterpretationen somit mit einer noch höheren Zuverlässigkeit vermieden werden. Alternativ oder zusätzlich kann das Auswerten der mehreren bereitgestellten Auswertesignale das Vergleichen von Bewegungsprofilen des mobilen Endgeräts und des Fahrzeugs umfassen. Durch das Vergleichen von Bewegungsprofilen des mobilen Endgeräts und des Fahrzeugs können Informationen zu der Position des mobilen Endgeräts im Fahrzeug gewonnen werden. Es kann ebenfalls eine Quantifizierung der den Bewegungsprofilen zugrundeliegenden Signale, beispielsweise durch Kreuzkorrelation oder Fast Fourier Transformation (FFT), erfolgen. Die Fahrzeugeigenbewegungen können beispielsweise durch fahrzeuginterne Aktuatoren absichtlich erzeugt werden, um eine Lokalisierung des mobilen Endgeräts innerhalb des Fahrzeugs zu ermöglichen. Die fahrzeuginternen Aktuatoren können Aktuatoren einer Sitzverstelleinrichtung, Aktuatoren einer Lenkunterstützung, einen oder mehrere fahrzeugeigene Elektromotoren oder einen oder mehrere Unwuchtaktuatoren umfassen. Alternativ oder zusätzlich kann das Auswerten der mehreren bereitgestellten Auswertesignale das Erfassen eines Zeitpunkts, zu welchem eine Tür des Fahrzeugs geschlossen wird, und/oder das Vergleichen von Beschleunigungsprofilen des mobilen Endgeräts und des Fahrzeugs umfassen. Die Beschleunigungsprofile des mobilen Endgeräts und des Fahrzeugs umfassen vorzugsweise Beschleunigungsinformationen des mobilen Endgeräts und des Fahrzeugs aus einer Zeitspanne, in welcher auch der Zeitpunkts, zu welchem die Tür des Fahrzeugs geschlossen worden ist, liegt. Durch das Vergleichen von Beschleunigungsprofilen des mobilen Endgeräts und des Fahrzeugs während des Türschließvorgangs kann erfasst werden, ob sich das mobile Endgerät in Kontakt mit dem Fahrzeug befindet. Wenn aus den Beschleunigungsinformationen des mobilen Endgeräts der Türschließvorgang ableitbar ist, ist dies ein starkes Indiz dafür, dass sich das mobile Endgerät innerhalb des Fahrzeugs und nicht außerhalb des Fahrzeugs am Körper des Fahrers befindet.

Die mehreren erfassten Signale, welche durch eine Positionsänderung des mobilen Endgeräts veränderbar sind, können ein Akustiksignal umfassen, welches von dem mobilen Endgerät mittels eines Mikrofons aufgenommen und somit erzeugt wurde. Alternativ oder zusätzlich können die mehreren erfassten Signale, welche durch eine Positionsänderung des mobilen Endgeräts veränderbar sind, ein Akustiksignal umfassen, welches von dem Fahrzeug mittels eines Mikrofons aufgenommen und somit erzeugt wurde. Die Akustiksignale können auf charakteristische Geräusche ausgewertet werden, welche einen Rückschluss darüber erlauben, ob sich das mobile Endgerät noch im Fahrzeug befindet. Außerdem kann ein von dem mobilen Endgerät erfasstes Akustiksignal mit einem von dem Fahrzeug erfassten Akustiksignale verglichen werden, um weitere Informationen über die Relativposition des mobilen Endgeräts in Bezug auf das Fahrzeug zu erhalten. Zusätzlich können das mobile Endgerät und/oder das Fahrzeug selbst Schallwellen erzeugen und aussenden, welche als Akustiksignal wieder aufgezeichnet werden können.

Außerdem können Schwingungen durch das mobile Endgerät erzeugt werden. Alternativ oder zusätzlich können Schwingungen durch das Fahrzeug erzeugt werden. Zur Erzeugung der Schwingungen können das mobile Endgerät und/oder das Fahrzeug beispielsweise einen Vibrationserzeuger umfassen. Die mehreren erfassten Signale, welche durch eine Positionsänderung des mobilen Endgeräts veränderbar sind, können ein Schwingungssignal umfassen, welches von dem mobilen Endgerät erzeugt wurde. Außerdem können die mehreren erfassten Signale, welche durch eine Positionsänderung des mobilen Endgeräts veränderbar sind, ein Schwingungssignal umfassen, welches von dem Fahrzeug erzeugt wurde. Ein von dem mobilen Endgerät erfasstes Schwingungssignal kann mit einem von dem Fahrzeug erfassten Schwingungssignale verglichen werden, um weitere Informationen über die Relativposition des mobilen Endgeräts in Bezug auf das Fahrzeug zu erhalten.

Das Auswerten der mehreren bereitgestellten Auswertesignale kann das Feststellen, ob sich das mobile Endgerät innerhalb des Fahrzeugs befindet, und/oder das Feststellen, ob sich das mobile Endgerät außerhalb des Fahrzeugs befindet, umfassen. Letztendlich benötigt ein Fahrzeugzutrittssystem, welches das Einschließen eines mobilen Endgeräts innerhalb des Fahrzeugs verhindert, die Information, ob sich das mobile Endgerät zum Verriegelungszeitpunkt im Innenraum des Fahrzeugs befindet. Durch das Erfassen dieser Information ist das Verfahren für die Benutzung mit einem entsprechenden Fahrzeugzutrittssystem geeignet.

Gemäß einem zweiten Aspekt schaffen Ausführungsbeispiele ein Verfahren zum Erfassen einer Relativposition eines mobilen Endgeräts in Bezug auf ein Fahrzeug. Bei dem erfindungsgemäßen Verfahren zum Erfassen der Relativposition des mobilen Endgeräts in Bezug auf das Fahrzeug werden mehrere Auswertesignale bereitgestellt, welche durch eine Positionsänderung des mobilen Endgeräts veränderbar sind, wobei die mehreren bereitgestellten Auswertesignale zum Erfassen der Relativposition des mobilen Endgeräts in Bezug auf das Fahrzeug ausgewertet werden. Das Auswerten der mehreren bereitgestellten Auswertesignale kann durch das Fahrzeug und/oder durch das mobile Endgerät erfolgen. Es gelten die gleichen Vorteile und Modifikationen wie zuvor beschrieben.

Gemäß einem dritten Aspekt schaffen Ausführungsbeispiele ein System zum Erfassen einer Relativposition eines mobilen Endgeräts in Bezug auf ein Fahrzeug. Das erfindungsgemäße System zum Erfassen der Relativposition des mobilen Endgeräts in Bezug auf das Fahrzeug umfasst ein mobiles Endgerät und ein Fahrzeug. Das System ist dazu eingerichtet, das in Zusammenhang mit dem ersten Aspekt und/oder dem zweiten Aspekt beschriebene Verfahren zum Erfassen einer Relativposition des mobilen Endgeräts in Bezug auf das Fahrzeug gemäß einer der vorstehend beschriebenen Ausführungsformen auszuführen. Es gelten die gleichen Vorteile und Modifikationen wie zuvor beschrieben. Das Fahrzeug und/oder das mobile Endgerät können eine Auswerteeinrichtung umfassen.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines erfindungsgemäßen Systems zum Erfassen einer Relativposition eines mobilen Endgeräts in Bezug auf ein Fahrzeug;
- Figur 2: ein Ablaufdiagramm eines erfindungsgemäßen Verfahrens zum Erfassen einer Relativposition eines mobilen Endgeräts in Bezug auf ein Fahrzeug gemäß einem Ausführungsbeispiel; und
- Figur 3: ein Ablaufdiagramm eines erfindungsgemäßen Verfahrens zum Erfassen einer Relativposition eines mobilen Endgeräts in Bezug auf ein Fahrzeug gemäß einem weiteren Ausführungsbeispiel.

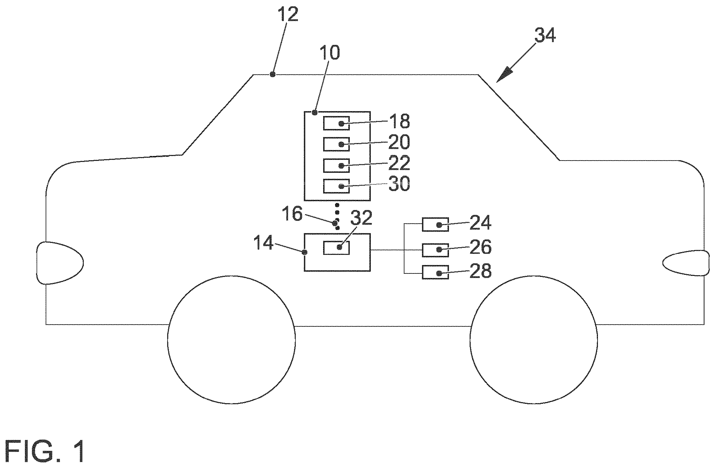

Figur 1 zeigt ein System 34 mit einem mobilen Endgerät 10 und einem Fahrzeug 12. Das mobile Endgerät 10 ist als Smartphone ausgebildet und umfasst drei Sensoreinheiten 18-22 und eine Kommunikationseinrichtung 30. Das Fahrzeug 12 umfasst eine Signalauswerteeinrichtung 14 und drei Sensoreinheiten 24-28, welche signalleitend mit der Signalauswerteeinrichtung 14 verbunden sind.

Die Signalauswerteeinrichtung 14 des Fahrzeugs 12 umfasst eine Kommunikationseinrichtung 32, welche durch eine signalleitende Verbindung 16 mit der Kommunikationseinrichtung 30 des mobilen Endgeräts 10 verbunden ist.

Die erste Sensoreinheit 18 des mobilen Endgeräts 10 ist als Funksignalsensor ausgebildet und dazu eingerichtet, die Signalstärke des Mobilfunksignals des mobilen Endgeräts 10 zu erfassen. Das mobile Endgerät 10 ist ferner dazu ausgebildet, aus der Signalstärke des eigenen Mobilfunksignals ein Auswertesignal zu erzeugen und dieses Auswertesignal der Auswerteeinrichtung 14 des Fahrzeugs 12 mittels der Kommunikationseinrichtung 30 bereitzustellen. Die zweite Sensoreinheit 20 des mobilen Endgeräts 10 ist als Magnetfeldsensor ausgebildet und dazu eingerichtet, ein von dem Erdmagnetfeld abhängiges Signal zu erzeugen und dieses Magnetfeldsignal der Auswerteeinrichtung 14 des Fahrzeugs 12 als Auswertesignal bereitzustellen. Die Bereitstellung dieses Auswertesignals erfolgt wiederum mittels der Kommunikationseinrichtungen 30, 32 des mobilen Endgeräts und des Fahrzeugs. Die dritte Sensoreinheit 22 des mobilen Endgeräts 10 ist als Beschleunigungssensor ausgebildet und dazu eingerichtet, die Bewegungen des mobilen Endgeräts 10 zu erfassen. Das von dem Beschleunigungssensor erzeugte Signal wird der Auswerteeinrichtung 14 des Fahrzeugs ebenfalls mittels der Kommunikationseinrichtungen 30, 32 des mobilen Endgeräts und des Fahrzeugs als Auswertesignal bereitgestellt.

Die erste Sensoreinheit 24 des Fahrzeugs 12 ist als Funksignalsensor ausgebildet und dazu eingerichtet, die Signalstärke und andere Parameter des Funksignals der Kommunikationsverbindung 16 zwischen dem mobilen Endgerät 10 und dem Fahrzeug 12 zu erfassen. Der Funksignalsensor kann außerdem dazu ausgebildet sein, ein GPS Signal, ein 5G Signal, ein WLAN Signal oder ein BTLE Signal zu erfassen. Das Auswertesignal wird auf Grundlage der erfassten Signalstärke und/oder der anderen erfassten Parameter des Funksignals der Kommunikationsverbindung 16 zwischen dem mobilen Endgerät 10 und dem Fahrzeug 12 erzeugt und der Auswerteeinrichtung 14 bereitgestellt. Die zweite Sensoreinheit 26 des Fahrzeugs 12 ist als Magnetfeldsensor ausgebildet und dazu eingerichtet, ein von dem Erdmagnetfeld abhängiges Signal zu erzeugen und dieses Magnetfeldsignal der Auswerteeinrichtung 14 bereitzustellen. Die dritte Sensoreinheit 28 des Fahrzeugs 12 ist als Beschleunigungssensor ausgebildet und dazu eingerichtet, die Bewegungen des Fahrzeugs 12 zu erfassen. Das von dem Beschleunigungssensor erzeugte Signal wird der Auswerteeinrichtung 14 ebenfalls als Auswertesignal bereitgestellt.

Die Auswerteeinrichtung 14 ist dazu eingerichtet, die insgesamt sechs bereitgestellten Auswertesignale zum Erfassen der Relativposition des mobilen Endgeräts 10 in Bezug auf das Fahrzeug 12 auszuwerten. Hierzu wird die zeitliche Veränderung der Signalstärke des Mobilfunksignals des mobilen Endgeräts 10 und die zeitliche Veränderung der Signalstärke des Funksignals der Kommunikationsverbindung 16 zwischen dem mobilen Endgerät 10 und dem Fahrzeug 12 zwischen dem Öffnen einer Tür des Fahrzeugs 12 und dem Schließen der Tür des Fahrzeugs 12 ausgewertet. Außerdem wird die zeitliche Veränderung des von dem mobilen Endgerät 10 bereitgestellten erdmagnetfeldabhängigen Signals und die zeitliche Veränderung des von dem Fahrzeug 12 bereitgestellten erdmagnetfeldabhängigen Signal ausgewertet. Zusätzlich wird die Bewegung des mobilen Endgeräts 10 durch die Auswerteeinrichtung 14 ausgewertet und die Bewegung des mobilen Endgeräts 10 mit der Bewegung des Fahrzeugs 12 verglichen.

Auf Grundlage der Auswertung der insgesamt sechs bereitgestellten Auswertesignale kann eine vergleichsweise sichere Feststellung erfolgen, ob das mobile Endgerät 10 von dem Benutzer beim Verlassen des Fahrzeugs 12 in dem Fahrzeug 12 zurückgelassen wurde.

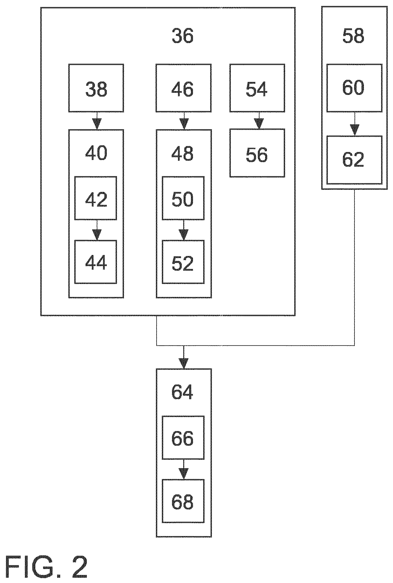

Figur 2 zeigt ein Verfahren zum Erfassen einer Relativposition eines mobilen Endgeräts 10 in Bezug auf ein Fahrzeug 12 gemäß einem Ausführungsbeispiel. Das Verfahren beruht auf der Auswertung von mehreren Auswertesignalen, damit eine vergleichsweise verlässliche Feststellung darüber getroffen werden kann, ob sich das mobile Endgerät 10 innerhalb oder außerhalb des Fahrzeugs 12 befindet. Das Verfahren beginnt mit dem folgenden Schritt:

| | |
|---|---|
| 36) | Bereitstellen von drei Auswertesignalen, welche durch eine Positionsänderung des mobilen Endgeräts 10 veränderbar sind. |

Die drei bereitgestellten Auswertesignale beziehen sich auf die Signalstärke des Funknetzes des mobilen Endgeräts 10, auf die Signalstärke der Bluetooth-Verbindung zwischen dem mobilen Endgerät 10 und dem Fahrzeug 12 und die Bewegung des mobilen Endgeräts 10. Zur Bereitstellung des sich auch die Signalstärke des Funknetzes des mobilen Endgeräts 10 beziehenden Auswertesignals umfasst das Bereitstellen der drei Auswertesignale, welche durch eine Positionsänderung des mobilen Endgeräts 10 veränderbar sind, den folgenden Schritt:

| | |
|---|---|
| 38) | Erfassen des Mobilfunksignals des mobilen Endgeräts 10. |

Da zum Erfassen der Relativposition des mobilen Endgeräts 10 in Bezug auf das Fahrzeug 12 nicht das Mobilfunksignal des mobilen Endgeräts 10 als solches, sondern die zeitliche Veränderung der Signalstärke des Mobilfunksignals oder die zeitliche Veränderung anderer Parameter des Mobilfunksignals verwendet werden soll, folgt auf das Erfassen des Mobilfunksignals des mobilen Endgeräts 10 der folgende Schritt:

| | |
|---|---|
| 40) | Erzeugen eines Auswertesignals aus dem erfassten Mobilfunksignal des mobilen Endgeräts 10. |

Das Erzeugen eines Auswertesignals aus dem erfassten Mobilfunksignal des mobilen Endgeräts 10 beinhaltet dabei die folgenden beiden Schritte:

| | |
|---|---|
| 42) | Messen der Signalstärke des Mobilfunksignals des mobilen Endgeräts 10; und |
| 44) | Erfassen der zeitlichen Veränderung der Signalstärke des Mobilfunksignals des mobilen Endgeräts 10. |

Zur Bereitstellung des sich auf die Signalstärke der Bluetooth-Verbindung zwischen dem mobilen Endgerät 10 und dem Fahrzeug 12 beziehenden Auswertesignals umfasst das Bereitstellen der drei Auswertesignale, welche durch eine Positionsänderung des mobilen Endgeräts 10 veränderbar sind, den folgenden Schritt:

| | |
|---|---|
| 46) | Erfassen des Bluetooth-Verbindungssignals zwischen dem mobilen Endgerät 10 und dem Fahrzeug 12. |

Da zum Erfassen der Relativposition des mobilen Endgeräts 10 in Bezug auf das Fahrzeug 12 nicht das Bluetooth-Verbindungssignal zwischen dem mobilen Endgerät 10 und dem Fahrzeug 12 als solches, sondern die zeitliche Veränderung der Signalstärke des Bluetooth-Verbindungssignals zwischen dem mobilen Endgerät 10 und dem Fahrzeug 12 verwendet werden soll, folgt auf das Erfassen des Bluetooth-Verbindungssignals zwischen dem mobilen Endgerät 10 und dem Fahrzeug 12 der folgende Schritt:

| | |
|---|---|
| 48) | Erzeugen eines Auswertesignals aus dem erfassten Bluetooth-Verbindungssignal zwischen dem mobilen Endgerät 10 und dem Fahrzeug 12. |

Das Erzeugen eines Auswertesignals aus dem erfassten Bluetooth-Verbindungssignal zwischen dem mobilen Endgerät 10 und dem Fahrzeug 12 beinhaltet dabei die folgenden Schritte:

| | |
|---|---|
| 50) | Messen der Signalstärke des Bluetooth-Verbindungssignals zwischen dem mobilen Endgerät 10 und dem Fahrzeug 12; und |
| 52) | Erfassen der zeitlichen Veränderung der Signalstärke des Bluetooth-Verbindungssignals zwischen dem mobilen Endgerät 10 und dem Fahrzeug 12. |

Zur Bereitstellung des sich auf die Bewegung des mobilen Endgeräts 10 beziehenden Auswertesignals umfasst das Bereitstellen der drei Auswertesignale, welche durch eine Positionsänderung des mobilen Endgeräts 10 veränderbar sind, die folgenden Schritte:

| | |
|---|---|
| 54) | Erfassen einer Bewegung des mobilen Endgeräts 10 mittels eines Beschleunigungssensors 18 des mobilen Endgeräts 10; und |
| 56) | Erzeugen eines Auswertesignals aus der erfassten Bewegung des mobilen Endgeräts 10. |

Das Verfahren berücksichtigt nicht nur drei Auswertesignale, welche durch eine Positionsänderung des mobilen Endgeräts 10 veränderbar sind, sondern auch ein Auswertesignal, welches durch eine Positionsänderung des Fahrzeugs 12 veränderbar ist. Das Verfahren umfasst demnach den folgenden Schritt:

| | |
|---|---|
| 58) | Bereitstellen von einem Auswertesignal, welches durch eine Positionsänderung des Fahrzeugs 12 veränderbar ist. |

Das bereitgestellte Auswertesignal bezieht sich auf die Bewegung des Fahrzeugs 12. Zur Bereitstellung des sich auf die Bewegung des Fahrzeugs 12 beziehenden Auswertesignals umfasst das Bereitstellen des einen Auswertesignals, welches durch eine Positionsänderung des Fahrzeugs 12 veränderbar ist, die folgenden Schritte:

| | |
|---|---|
| 60) | Erfassen einer Bewegung des Fahrzeugs 12 mittels eines Beschleunigungssensors 24 des Fahrzeugs 12; und |
| 62) | Erzeugen des einen Auswertesignals aus der erfassten Bewegung des Fahrzeugs 12. |

Nachdem die notwendigen Auswertesignale bereitgestellt wurden, wird der folgende Schritt ausgeführt:

| | |
|---|---|
| 64) | Auswerten der mehreren bereitgestellten Auswertesignale durch das Fahrzeug 12 zum Erfassen der Relativposition des mobilen Endgeräts 10 in Bezug auf das Fahrzeug 12. |

Neben dem Auswerten der zeitlichen Veränderung der Signalstärke des Mobilfunksignals des mobilen Endgeräts 10 und der zeitlichen Veränderung der Signalstärke des Bluetooth-Verbindungssignals zwischen dem mobilen Endgerät 10 und dem Fahrzeug 12 umfasst das Auswerten der mehreren bereitgestellten Auswertesignale den folgenden Schritt:

| | |
|---|---|
| 66) | Vergleichen der zeitlichen Veränderung der Beschleunigungsamplitude des mobilen Endgeräts 10 und des Fahrzeugs 12. |

Das Auswerten der mehreren bereitgestellten Auswertesignale durch das Fahrzeug 12 zum Erfassen der Relativposition des mobilen Endgeräts 10 in Bezug auf das Fahrzeug 12 wird abgeschlossen mit dem Schritt:

| | |
|---|---|
| 68) | Feststellen, ob sich das mobile Endgerät 10 innerhalb des Fahrzeugs 12 befindet. |

Das erfindungsgemäße Verfahren ermöglicht durch die Berücksichtigung von mehreren Auswertesignalen zum Erfassen der Relativposition des mobilen Endgeräts 10 in Bezug auf das Fahrzeug 12 eine zuverlässige Feststellung, ob das mobile Endgerät 10 beim Verlassen des Fahrzeugs 12 von dem Benutzer in dem Fahrzeug 12 zurückgelassen wurde.

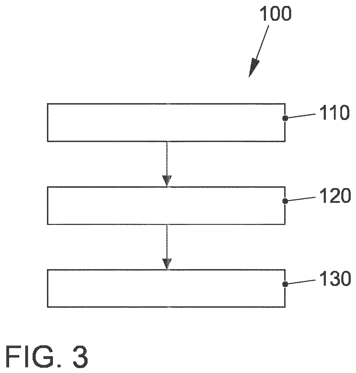

Figur 3 zeigt ein Ablaufdiagramm des erfindungsgemäßen Verfahrens 100 zum Erfassen einer Relativposition des mobilen Endgeräts 10 in Bezug auf das Fahrzeug 12 gemäß einem weiteren Ausführungsbeispiel. Das Verfahren 100 umfasst Bereitstellen 110 von mehreren Auswertesignalen. Die mehreren Auswertesignale werden jeweils durch eine Positionsänderung des mobilen Endgeräts 10 verändert. Zudem umfasst das Verfahren 100 Feststellen 120 eines Ereignisses an dem Fahrzeug 12. Das Verfahren 100 umfasst des Weiteren Auswerten 130 der mehreren bereitgestellten Auswertesignale zum Erfassen der Relativposition des mobilen Endgeräts 10 in Bezug auf das Fahrzeug 12 ansprechend auf das Feststellen 120 des Ereignisses an dem Fahrzeug 12.

Das mobile Endgerät 10 kann ein Mobiltelefon, ein Smartphone, eine Smartwatch, ein Tablet-Computer, ein Laptop, ein Mobilgerät oder ein Fahrzeugschlüssel sein. Ferner kann das Fahrzeug 12 ein Landfahrzeug, wie ein Personenkraftwagen, ein Lastkraftwagen oder ein Motorrad, ein Schienenfahrzeug, wie ein Zug oder eine Straßenbahn, ein Luftfahrzeug, wie ein Hubschrauber oder ein Flugzeug, oder ein Wasserfahrzeug, wie ein Schiff oder ein Boot, sein. Zudem können das mobile Endgerät 10 und das Fahrzeug 12 zur Kommunikation über ein drahtloses Kommunikationsnetzwerk ausgebildet sein. Hierzu können das mobile Endgerät 10 und das Fahrzeug 12 jeweils eine drahtlose Kommunikationsschnittstelle aufweisen, welche zur Kommunikation über das drahtlose Kommunikationsnetzwerk ausgebildet ist. Beispielsweise ist das drahtlose Kommunikationsnetzwerk ein Bluetooth-Kommunikationsnetzwerk, ein Bluetooth-Low-Energy-Kommunikationsnetzwerk, ein Nahfeldkommunikationsnetzwerk, ein Wireless Local Area Network (WLAN)-Kommunikationsnetzwerk, ein Ultra Wideband (UWB)-Kommunikationsnetzwerk oder ein Mobilfunknetzwerk. Zudem kann das Bereitstellen 110 mittels einer oder mehreren der Sensoreinheiten 18-28 durchgeführt werden und/oder kann das Auswerten 130 mittels der Signalauswerteeinrichtung 14 durchgeführt werden.

Das Verfahrens 100 zum Erfassen der Relativposition des mobilen Endgeräts 10 in Bezug auf das Fahrzeug 12 kann bei einer Vielzahl von Situationen durchgeführt werden. Beispielsweise wird das Verfahren 100 durchgeführt um festzustellen, ob ein Benutzer, wie ein Fahrer oder Beifahrer, des Fahrzeugs 12 beim Verlassen des Fahrzeugs 12 das mobile Endgerät 10 in dem Fahrzeug 12 zurückgelassen hat oder nicht. Hat der Benutzer das mobile Endgerät in dem Fahrzeug 12 zurückgelassen, kann der Benutzer mittels eines Signaltons oder einem optischen Anzeigeelement darauf hingewiesen werden. Beispielsweise wird der Signalton über einen Lautsprecher des mobilen Endgeräts 10 oder einen Lautsprecher des Fahrzeugs 12 ausgegeben.

Zudem kann das Verfahren 100 bei einem Losfahren des Fahrzeugs 12 oder bei einem Starten des Motors des Fahrzeugs 12 durchgeführt werden, um festzustellen, ob sich das mobile Endgerät 10 in dem Fahrzeug 12 befindet. Befindet sich das mobile Endgerät 10 beim Losfahren oder beim Starten des Motors außerhalb des Fahrzeugs 12, beispielsweise auf dem Dach des Fahrzeugs 12 oder auf einer Frontscheibe des Fahrzeugs 12, so kann der Benutzer mittels eines Signaltons oder einem optischen Anzeigeelement darauf hingewiesen werden. Beispielsweise leuchtet hierzu eine Warnleuchte im Armaturenbrett des Fahrzeugs 12 auf.

Bei einigen Ausführungsbeispielen umfasst das Bereitstellen 110 der mehreren Auswertesignale ein Erfassen von mehreren Signalen eines Navigationssatellitensystems, wie des NAVSTAR GPS Satellitensystems, des GLONASS-Satellitensystems, des Galileo-Satellitensystems oder des Beidou-Satellitensystems, durch das mobile Endgerät 10 oder einen Navigations-Satelliten-Transceiver des mobilen Endgeräts 10 zu unterschiedlichen Zeitpunkten. Das mobile Endgerät 10 kann die Signale kontinuierlich, beispielsweise im Abstand von mehreren Sekunden, erfassen und abspeichern. Vorzugsweise speichert das mobile Endgerät 10 die Signale in einem Ringspeicher ab. Wird nun ein Ereignis, wie ein Schließen oder ein Verriegeln einer Tür des Fahrzeugs 12, an dem Fahrzeug 12 festgestellt, kann auf Basis der gespeicherten Signale die Relativposition des mobilen Endgeräts 10 in Bezug auf das Fahrzeug 12 erfasst werden. Hierzu wird beispielsweise eine Anzahl der in dem jeweiligen Signal gefundenen Navigationssatelliten, deren Signalstärke und/oder andere Signalparameter dieser zu einem bestimmten Zeitpunkt, beispielsweise kurz vor dem Öffnen der Tür des Fahrzeugs 12, mit den korrespondierenden Werten nach dem bestimmten Zeitpunkt, beispielsweise kurz vor oder nach dem Schließen der Tür des Fahrzeugs 12, verglichen. Da die Fahrzeughülle des Fahrzeugs 12 eine Abschirmung oder Feldveränderung der Signale des Navigationssatellitensystems bewirkt, kann durch diesen Vergleich darauf rückgeschlossen werden, ob sich das mobile Endgerät 10 nach dem Ereignis innerhalb oder außerhalb des Fahrzeugs 12 befindet. Ist beispielsweise die Anzahl der gefundenen Navigationssatelliten oder deren Signalstärke nach dem Schließen der Tür des Fahrzeugs 12 größer als vor dem Öffnen der Tür, so kann daraus geschlossen werden, dass das mobile Endgerät 10 das Fahrzeug 12 verlassen hat. Ist dagegen die Anzahl der gefundenen Navigationssatelliten oder deren Signalstärke nach dem Schließen der Tür des Fahrzeugs 12 geringer als vor dem Öffnen der Tür, so kann daraus geschlossen werden, dass das mobile Endgerät 10 in das Fahrzeug 12 eingebracht wurde. Entspricht dagegen die Anzahl der gefundenen Navigationssatelliten oder deren Signalstärke vor dem Öffnen der Tür des Fahrzeugs 12 der Anzahl der gefundenen Navigationssatelliten oder deren Signalstärke nach dem Schließen der Tür des Fahrzeugs 12, so kann daraus geschlossen werden, dass das mobile Endgerät 10 seine Relativposition gegenüber dem Fahrzeug 12 nicht verändert hat. Das mobile Endgerät 10 kann sich in diesem Fall entweder außerhalb oder innerhalb des Fahrzeugs 12 befinden. Dies kann einem Benutzer des Fahrzeugs 12 wie oben beschrieben angezeigt werden. Für den Vergleich kann das letzte vor dem Öffnen der Tür erfasste Signal mit dem ersten nach dem Öffnen oder Schließen der Tür erfassten Signal verglichen werden. Alternativ oder zusätzlich können Mittelwerte von vor und nach dem Öffnen der Tür erfassten Signalen, beispielsweise von 3, 5 oder 10 erfassten Signalen, oder daraus abgeleiteten Werden verglichen werden. Hierbei können optional die jeweiligen erfassten Minimalwerte und/oder Maximalwerte verworfen werden.

Bei einigen Ausführungsbeispielen umfasst das Bereitstellen 110 der mehreren Auswertesignale ein Erfassen von mehreren Signalen eines Mobilfunksystems, beispielsweise von Telefonienetzsignalen eines GSM-, UMTS- oder LTE-Mobilfunksystems, durch das mobile Endgerät 10 oder einen Baseband-Transceiver des mobilen Endgeräts 10 zu unterschiedlichen Zeitpunkten. Das mobile Endgerät 10 kann die Signale kontinuierlich, beispielsweise im Abstand von mehreren Sekunden, erfassen und abspeichern. Vorzugsweise speichert das mobile Endgerät 10 die Signale in einem Ringspeicher ab. Wird nun ein Ereignis, wie ein Schließen oder ein Verriegeln einer Tür des Fahrzeugs 12, an dem Fahrzeug 12 festgestellt, kann auf Basis der gespeicherten Signale die Relativposition des mobilen Endgeräts 10 in Bezug auf das Fahrzeug 12 erfasst werden. Hierzu wird beispielsweise eine Art des in dem jeweiligen Signal gefundenen Telefoniebandes, dessen Signalstärke und/oder andere Signalparameter des jeweiligen Signals zu einem bestimmten Zeitpunkt, beispielsweise kurz vor einem Öffnen der Tür des Fahrzeugs 12, mit den korrespondierenden Werten nach dem bestimmten Zeitpunkt, beispielsweise kurz vor oder nach dem Schließen der Tür des Fahrzeugs 12, verglichen. Da die Fahrzeughülle des Fahrzeugs 12 eine Abschirmung oder Feldveränderung der Signale des Mobilfunksystems bewirkt, kann durch diesen Vergleich darauf rückgeschlossen werden, ob sich das mobile Endgerät 10 nach dem Ereignis innerhalb oder außerhalb des Fahrzeugs 12 befindet. Ist beispielsweise die Signalstärke der erfassten Signale nach dem Schließen der Tür des Fahrzeugs 12 größer als vor dem Öffnen der Tür, so kann daraus geschlossen werden, dass das mobile Endgerät 10 das Fahrzeug 12 verlassen hat. Ist dagegen die Signalstärke der erfassten Signale nach dem Schließen der Tür des Fahrzeugs 12 geringer als vor dem Öffnen der Tür, so kann daraus geschlossen werden, dass das mobile Endgerät 10 in das Fahrzeug 12 eingebracht wurde. Entspricht dagegen die Signalstärke der erfassten Signale vor dem Öffnen der Tür des Fahrzeugs 12 der Signalstärke der erfassten Signale nach dem Schließen der Tür des Fahrzeugs 12, so kann daraus geschlossen werden, dass das mobile Endgerät 10 seine Relativposition gegenüber dem Fahrzeug 12 nicht verändert hat. Das mobile Endgerät 10 kann sich in diesem Fall entweder außerhalb oder innerhalb des Fahrzeugs 12 befinden. Dies kann einem Benutzer des Fahrzeugs 12 wie oben beschrieben angezeigt werden. Für den Vergleich kann das letzte vor dem Öffnen der Tür erfasste Signal mit dem ersten nach dem Öffnen oder Schließen der Tür erfassten Signal verglichen werden. Alternativ oder zusätzlich können Mittelwerte von vor und nach dem Öffnen der Tür erfassten Signalen, beispielsweise von 3, 5 oder 10 erfassten Signalen, oder daraus abgeleiteten Werden verglichen werden. Hierbei können optional die jeweiligen erfassten Minimalwerte und/oder Maximalwerte verworfen werden.

Bei einigen Ausführungsbeispielen umfasst das Bereitstellen 110 der mehreren Auswertesignale ein Erfassen der Feldstärke des auf das mobile Endgerät wirkenden Erdmagnetfelds durch das mobile Endgerät 10 oder einen Magnetfeldsensor des mobilen Endgeräts 10 zu unterschiedlichen Zeitpunkten. Das mobile Endgerät 10 kann die Feldstärke kontinuierlich, beispielsweise im Abstand von mehreren Sekunden, erfassen und abspeichern. Vorzugsweise speichert das mobile Endgerät 10 die Feldstärken in einem Ringspeicher ab. Wird nun ein Ereignis, wie ein Schließen oder ein Verriegeln einer Tür des Fahrzeugs 12, an dem Fahrzeug 12 festgestellt, kann auf Basis der gespeicherten Feldstärken die Relativposition des mobilen Endgeräts 10 in Bezug auf das Fahrzeug 12 erfasst werden. Hierzu wird beispielsweise die Feldstärke zu einem bestimmten Zeitpunkt, beispielsweise kurz vor einem Öffnen der Tür des Fahrzeugs 12, mit der Feldstärke nach dem bestimmten Zeitpunkt, beispielsweise kurz vor oder nach dem Schließen der Tür des Fahrzeugs 12, verglichen. Da die Fahrzeughülle des Fahrzeugs 12 eine Abschirmung des Erdmagnetfelds bewirkt, kann durch diesen Vergleich darauf rückgeschlossen werden, ob sich das mobile Endgerät 10 nach dem Ereignis innerhalb oder außerhalb des Fahrzeugs 12 befindet. Ist beispielsweise die Feldstärke nach dem Schließen der Tür des Fahrzeugs 12 größer als vor dem Öffnen der Tür, so kann daraus geschlossen werden, dass das mobile Endgerät 10 das Fahrzeug 12 verlassen hat. Ist dagegen die Feldstärke nach dem Schließen der Tür des Fahrzeugs 12 geringer als vor dem Öffnen der Tür, so kann daraus geschlossen werden, dass das mobile Endgerät 10 in das Fahrzeug 12 eingebracht wurde. Entspricht dagegen die Feldstärke vor dem Öffnen der Tür des Fahrzeugs 12 der Feldstärke nach dem Schließen der Tür des Fahrzeugs 12, so kann daraus geschlossen werden, dass das mobile Endgerät 10 seine Relativposition gegenüber dem Fahrzeug 12 nicht verändert hat. Das mobile Endgerät 10 kann sich in diesem Fall entweder außerhalb oder innerhalb des Fahrzeugs 12 befinden. Dies kann einem Benutzer des Fahrzeugs 12 wie oben beschrieben angezeigt werden. Für den Vergleich kann die letzte vor dem Öffnen der Tür erfasste Feldstärke mit der ersten nach dem Öffnen oder Schließen der Tür erfassten Feldstärke verglichen werden. Alternativ oder zusätzlich können Mittelwerte von vor und nach dem Öffnen der Tür erfassten Feldstärken, beispielsweise von 3, 5 oder 10 erfassten Feldstärken, verglichen werden. Hierbei können optional die jeweiligen erfassten Minimalwerte und/oder Maximalwerte verworfen werden.

Bei einigen Ausführungsbeispielen umfasst das Bereitstellen 110 der mehreren Auswertesignale ein Erfassen einer Bewegung des mobilen Endgeräts 10 mittels eines Beschleunigungssensors des mobilen Endgeräts 10 und ein Erfassen einer Bewegung des Fahrzeugs 12 mittels eines Beschleunigungssensor des Fahrzeugs 12. Beispielsweise ist die Bewegung des Fahrzeugs 12 eine durch ein Ein- oder Aussteigen einer Person bewirkte Bewegung des Fahrzeugs 12, eine durch ein Zuschlagen einer Tür des Fahrzeugs 12 bewirkte Bewegung des Fahrzeugs 12, oder eine durch eine sonstige Vibration des Fahrzeugs 12, beispielsweise eine durch einen Elektromotor des Fahrzeugs 12 verursachte Vibration, bewirkte Bewegung des Fahrzeugs 12. Hierbei kann das Auswerten 130 der bereitgestellten Auswertesignale ein Vergleichen von Bewegungsfrequenzen oder Vibrationsfrequenzen der erfassten Bewegung der mobilen Endgeräts 10 und der erfassten Bewegung des Fahrzeugs 12 umfassen. Stimmen die Bewegungsfrequenzen oder Vibrationsfrequenzen überein, so kann darauf geschlossen werden, dass sich das mobile Endgerät 10 in dem Fahrzeug 12 befindet. Andernfalls kann sich das mobile Endgerät 10 außerhalb des Fahrzeugs 12 befinden. Ferner kann das Auswerten 130 der bereitgestellten Auswertesignale ein Vergleichen von Bewegungsmustern oder Vibrationsmustern der erfassten Bewegung der mobilen Endgeräts 10 und der erfassten Bewegung des Fahrzeugs 12 umfassen. Stimmen die Bewegungsmuster oder Vibrationsmuster überein, so kann darauf geschlossen werden, dass sich das mobile Endgerät 10 in dem Fahrzeug 12 befindet. Andernfalls befindet sich das mobile Endgerät 10 außerhalb des Fahrzeugs 12.

Bei einigen Ausführungsbeispielen kann mittels des Verfahrens 100 ein indizienbasiertes Verfahren zur Erkennung von mobilen Endgeräten 10, wie Smartphones, innerhalb und außerhalb von Fahrzeugen 12 bereitgestellt werden.

Bei einigen Ausführungsbeispielen können mit einem oder mehreren Sensoren 18-28 in dem mobilen Endgerät 10 und/oder in dem Fahrzeug 12 mit unterschiedlichen Auswertungsstrategien der Messwerte Indizien für den Aufenthaltsort, beispielsweise innerhalb oder außerhalb des Fahrzeugs 12, des mobilen Endgeräts 10 abgeleitet werden. Anhand von mehreren solcher unterschiedlichen Messwerteauswertungsstrategien kann eine ausreichend genaue Aussage ermöglicht werden, ob sich das mobile Endgerät 10 innerhalb oder außerhalb des Fahrzeugs 12 befindet. Beispielsweise wird bei unterschiedlichen Ergebnissen der Auswertestrategien für der Aufenthaltsort des mobilen Endgeräts 10 derjenige Aufenthaltsort ausgewählt, der mittels der Mehrheit der Auswertestrategien bestimmt wurde. Zudem können den unterschiedlichen Auswertestrategien unterschiedliche Gewichtungsfaktoren zugeordnet werden. Ergibt eine erste Anzahl von Auswertestrategien einen ersten Aufenthaltsort des mobilen Endgeräts 10 und eine zweite Anzahl von Auswertestrategien einen zweiten Aufenthaltsort des mobilen Endgeräts 10, werden beispielsweise eine erste Summe aus den Gewichtungsfaktoren der ersten Anzahl der Auswertestrategien und eine zweite Summe aus den Gewichtungsfaktoren der zweiten Anzahl der Auswertestrategien gebildet. Wenn die erste Summe größer ist als die zweite Summe, kann sich das mobile Endgerät 10 an dem ersten Aufenthaltsort befinden. Andernfalls kann sich das mobile Endgerät 10 an dem zweiten Aufenthaltsort befinden. Zudem kann durch Ausschlusskriterien eine Innen-/Außenerkennung verbessert oder unterstützt werden. Hierzu wird beispielsweise zumindest einer Auswertestrategie ein besonders hoher Gewichtungsfaktor zugeordnet.

Bei einigen Ausführungsbeispielen können die Auswertestrategien im konkreten Kontext von Ereignissen oder Triggerereignissen in ihrer Aussagekraft verstärkt werden. Entsprechende Ereignistrigger können zwischen mobilen Endgerät 10 und Fahrzeug 12 uni- oder bidirektional per Funkkommunikation, beispielsweise über das drahtlose Kommunikationsnetzwerk, ausgetauscht und dadurch Messwertauswertungen in zeitlichen Bezug zu den Ereignissen gesetzt werden.

Bei einigen Ausführungsbeispielen kann eine der Auswertestrategien die Messung der Veränderungen der Qualität eines Navigationssignals, beispielsweise eines GPS-, Galileo- oder Glonass-Navigationssignals, mit dem Navigations-Satelliten-Transceiver des mobilen Endgerätes 10 zwischen dem Öffnen der Tür und dem Schließen/Verriegeln dieser umfassen, um daraus ein Indiz dafür abzuleiten, ob das mobile Endgerät 10 das Fahrzeug 12 verlassen hat. Hierbei wird beispielswiese die Feldabschirmung oder Feldveränderung durch die Fahrzeughülle ausgenutzt. Ferner wird hierbei beispielsweise die Anzahl der gefundenen Satelliten, deren Signalstärke und/oder andere Signalparameter ausgewertet.

Bei einigen Ausführungsbeispielen kann eine der Auswertestrategien die Messung der Veränderungen der Qualität des Telefonienetzsignals, beispielsweise eines Global System for Mobile Communications (GSM) -Telefonienetzsignals, eines Universal Mobile Telecommunications System (UMTS)-Telefonienetzsignals, eines Long Term Evolution (LTE)-Telefonienetzsignals oder eines Long Term Evolution Advanced (LTE-A)-Telefonienetzsignals, mit dem Baseband-Transceiver des mobilen Endgerätes 10 zwischen dem Öffnen der Tür des Fahrzeugs 12 und dem Schließen/Verriegeln dieser umfassen, um daraus ein Indiz dafür abzuleiten, ob das mobile Endgerät 10 das Fahrzeug 12 verlassen hat. Hierbei kann die Feldabschirmung oder die Feldveränderung durch die Fahrzeughülle des Fahrzeugs 12 ausgenutzt werden. Beispielsweise wird hierbei die Art des gefundenen Telefoniebandes, dessen Signalstärke und/oder andere Signalparameter ausgewertet.

Bei einigen Ausführungsbeispielen kann eine der Auswertestrategien die Messung der Veränderungen des Erdmagnetfeldes mit dem Magnetfeldsensor des mobilen Endgerätes 10 zwischen dem Öffnen der Tür des Fahrzeugs 12 und dem Schließen/Verriegeln dieser umfassen, um daraus ein Indiz dafür abzuleiten, ob das mobile Endgerät 10 das Fahrzeug 12 verlassen hat. Hierbei kann die Feldabschirmung oder die Feldveränderung durch die Fahrzeughülle des Fahrzeugs 12 ausgenutzt werden.

Bei einigen Ausführungsbeispielen kann eine der Auswertestrategien die Messung der Veränderungen der Beschleunigungsmesswerte mit dem Beschleunigungssensor des mobilen Endgerätes 10 zwischen dem Öffnen der Tür des Fahrzeugs 12 und dem Schließen/Verriegeln dieser umfassen, um daraus abzuleiten, ob das mobile Endgerät 10 das Fahrzeug 12 verlassen hat, beispielsweise durch charakteristische Bewegungsmuster, Richtungsvektoren oder andere bewegungscharakteristische Größen.

Bei einigen Ausführungsbeispielen kann eine der Auswertestrategien die Messung der Beschleunigungsmesswerte mit dem Beschleunigungssensor des mobilen Endgerätes 10 während eines Zeitfensters um den Moment der Erkennung des Verriegelungswunsches, beispielsweise wenn eine Betätigung der Sperr (englisch: "Lock")-Taste oder -Schaltfläche am Türgriff von dem Fahrzeug 12 oder einem System erkannt wurde, herum umfassen. Beispielsweise werden die Beschleunigungsmesswerte von einer Sekunde vor dem Moment der Erkennung des Verriegelungswunsches bis eine Sekunde danach gemessen. Da dieser vom Nutzer zu beliebiger Zeit ausgelöste oder getriggerte Moment dem mobilen Endgerät 10 nicht im Vorhinein bekannt ist, kann dieses die Beschleunigungsmesswerte, beispielsweise in einen Ringspeicher, der also wenige Sekunden zwischenspeichert, speichern, so dass rückblickend alle notwendigen Daten für eine Auswertung zur Verfügung stehen. Die Auswertung kann die Messdaten insbesondere auf eine Ruhelage des mobilen Endgerätes 10 untersuchen. Eine mit einer sehr engen Toleranz definierte Bewegungslosigkeit und/oder unveränderte Lage des mobilen Endgerätes 10 kann ein Indiz dafür sein, dass das mobile Endgerät 10 zu diesem Zeitpunkt noch in dem Fahrzeug 12 liegt und eben nicht in der Hosen- /Jackentasche eines Nutzers. Dieser Ansatz kann darüber hinaus in sehr ähnlicher Weise für den Moment des Entriegelungswunsches genutzt werden, was unmittelbar zusätzlich einen großen Sicherheitssprung im Schutz vor Relaisangriffen ermöglichen kann: Wenn das mobile Endgerät 10 irgendwo unbewegt herumliegt, kann ein Freihandsystem (englisch: "Hands-Free-System") des Fahrzeugs 12 vor einem Relaisangriff geschützt werden, beispielsweise bei einer Zugangs- und/oder Fahrberechtigungsanforderung. Optional kann mittels paralleler Messung der Bewegungen des mobilen Endgerätes 10 mit dem Beschleunigungssensors des mobilen Endgeräts 10 und der Bewegungen des Fahrzeugs 12 mit einem fahrzeugeigenen Beschleunigungssensors aus der Ähnlichkeit des Veränderungen der Beschleunigungsamplitude das Indiz für die Ruhelage des mobilen Endgerätes 10 relativ zu dem Fahrzeug 12 gewonnen werden. So können durch Fahrzeugeigenbewegung bedingte Falschaussagen über die Ruhelage des mobilen Endgerätes 10 im Fahrzeug 12 eliminiert werden. Optional kann ferner mittels paralleler Messung der Bewegungen des mobilen Endgerätes 10 mit dem Beschleunigungssensors des mobilen Endgerätes 10 und der Bewegungen des Fahrzeugs 12 mit einem fahrzeugeigenen Beschleunigungssensors aus der Ähnlichkeit der jeweiligen Bewegungsprofile, beispielsweise quantifiziert durch Kreuzkorrelation, schnelle Fourier-Transformation (englisch: "fast Fourier transform", FFT), etc., das Indiz für die Position des mobilen Endgerätes 10 in dem Fahrzeug 12 gewonnen werden. Die Fahrzeugeigenbewegungen können gegebenenfalls, falls nicht ohnehin bereits vorhanden, durch eine fahrzeuginterne Aktorik, wie geeignete, beispielsweise pulsierende, Ansteuerung bestehender Aktorik, wie dem sogenannten "Power Seat", dem sogenannten "Power Steering", einem Elektromotor etc. oder dedizierte zusätzliche Aktorik, beispielsweise einen Unwuchtaktor, erzeugt werden.

Bei einigen Ausführungsbeispielen kann eine weitere Auswertestrategie auf der zeitgleichen Ähnlichkeit oder Korrelation der gemessenen Beschleunigungsprofile einer parallelen Messung mit Beschleunigungssensoren im mobilen Endgerät 10 und im Fahrzeug 12 zum Zeitpunkt des Zuschlagens einer Tür des Fahrzeugs 12 beruhen, um daraus abzuleiten, ob sich das mobile Endgerät 10 im mechanischen Kontakt mit dem Fahrzeug 12 befindet, beispielsweise ob das mobile Endgerät 10 im Fahrzeug 12 liegt. Dies kann ein starkes Indiz dafür sein, dass sich das mobile Endgerät 10 noch im Fahrzeug 12 und nicht außerhalb des Fahrzeuges 12 am Körper des Fahrers befindet. Hierbei kann als Aktor letztlich der Nutzer oder Faherer selbst und keine spezielle elektrisch angetriebene Aktorik genutzt werden.

Bei einigen Ausführungsbeispielen kann eine weitere Auswertestrategie die Aufnahme von Geräuschen mit einem Mikrofon des mobilen Endgerätes 10 umfassen, indem die aufgenommenen Geräusche dahingehend analysiert werden, ob charakteristische Geräusche als Indiz für ein Verlassen des Fahrzeugs 12 vorhanden sind. Hierzu kann beispielsweise ein Vergleich der aufgenommenen Geräusche mit in dem mobilen Endgerät 10 oder in dem Fahrzeug 10 vorgespeicherten Referenzgeräuschen durchgeführt werden. Optional können zudem mittels paralleler Aufnahme und Auswertung der Geräusche mit dem mobilen Endgerät 10 und einem Mikrofon in dem Fahrzeug 12 Indizien für den Aufenthalt des mobilen Endgeräts innerhalb oder außerhalb des Fahrzeugs 12 gewonnen werden. Hierbei können die jeweiligen aufgenommenen Geräusche auf gemeinsame Frequenzen oder Tonsignale überprüft werden. Optional kann zudem das Fahrzeug 12 Schallwellen erzeugen und/oder abgeben, die zur obigen Auswertung mit herangezogen werden.

Bei einigen Ausführungsbeispielen kann eine weitere Auswertestrategie ein Aussenden von Schallwellen durch das mobile Endgerät 10 zu bestimmten Zeitpunkten umfassen, die durch ein Mikrofon in dem Fahrzeug 12 aufgenommen und ausgewertet werden, beispielsweise nach dem Schließen der Türen und Fenster des Fahrzeugs 12 und/oder vor dem Verriegeln des Fahrzeugs 12. Hierzu kann beispielsweise ein Vergleich der aufgenommenen Geräusche mit den ausgesendeten Schallwellen, beispielsweise auf übereinstimmende Frequenzen und/oder Tonfolgen, durchgeführt werden.

Bei einigen Ausführungsbeispielen kann eine weitere Auswertestrategie ein Erzeugen von Schwingungen durch Vibration des mobilen Endgeräts 10 zu bestimmten Zeitpunkten umfassen, die durch einen Beschleunigungssensor in dem Fahrzeug 12 ausgewertet werden, um zu erkennen, ob das mobile Endgerät 10 in dem Fahrzeug 12 liegt.

### Bezugszeichenliste

- 10: mobiles Endgerät
- 12: Fahrzeug
- 14: Signalauswerteeinrichtung
- 16: Kommunikationsverbindung
- 18-22: Sensoreinheiten des mobilen Endgeräts
- 24-28: Sensoreinheiten des Fahrzeugs
- 30: Kommunikationseinrichtung
- 32: Kommunikationseinrichtung
- 34: System
- 36-68: Verfahrensschritte
- 100: Verfahren
- 110: Bereitstellen
- 120: Feststellen
- 130: Auswerten

## Patentansprüche

1. Verfahren (100) zum Erfassen einer Relativposition eines mobilen Endgeräts (10) in Bezug auf ein Fahrzeug (12), mit den Schritten:
- Bereitstellen (110), durch das mobile Endgerät (10), von mehreren Auswertesignalen, welche durch eine Positionsänderung des mobilen Endgeräts (10) veränderbar sind und verändert werden, wobei die mehreren Auswertesignale auf der Basis von Sensorsignalen mehrerer Sensoren des mobilen Endgeräts bereitgestellt werden, wobei zumindest eines der mehreren Auswertesignale auf der Messung einer Signalstärke einer oder mehrerer erfasster Mobilfunksignale durch das mobile Endgerät (10) basiert;
- Feststellen (120) eines Ereignisses an dem Fahrzeug (12); und
- Auswerten (130) der mehreren bereitgestellten Auswertesignale zum Erfassen der Relativposition des mobilen Endgeräts (10) in Bezug auf das Fahrzeug (12) ansprechend auf das Feststellen (120) des Ereignisses an dem Fahrzeug (12) um festzustellen, ob sich das mobile Endgerät (10) innerhalb des Fahrzeugs (12) befindet.

2. Verfahren (100) nach Anspruch 1, wobei das Ereignis an dem Fahrzeug (12) eines der folgenden Ereignisse ist:
- ein Öffnen oder ein Schließen einer Tür, einer Klappe, eines Fensters oder einer anderen Öffnung des Fahrzeugs (12);
- eine Betätigung einer Verriegelungseinrichtung des Fahrzeugs (12);
- eine Betätigung eines Zündschlosses des Fahrzeugs (12); oder
- eine Betätigung einer Anlassereinrichtung des Fahrzeugs (12).

3. Verfahren (100) nach Anspruch 1 oder 2, wobei das Bereitstellen (110) der mehreren Auswertesignale, welche durch eine Positionsänderung des mobilen Endgeräts (10) veränderbar sind, die folgenden Schritte umfasst:
- Erfassen von mehreren Signalen, welche durch eine Positionsänderung des mobilen Endgeräts (10) veränderbar sind; und
- Erzeugen der mehreren Auswertesignale, welche durch eine Positionsänderung des mobilen Endgeräts (10) veränderbar sind, aus den mehreren erfassten Signalen, welche durch eine Positionsänderung des mobilen Endgeräts (10) veränderbar sind.

4. Verfahren (100) nach Anspruch 3, wobei die erzeugten Auswertesignale in einem Ringspeicher zwischengespeichert werden, und wobei lediglich Signaldaten einer ausgewählten Zeitspanne zur Auswertung zwischengespeichert werden.

5. Verfahren (100) nach Anspruch 3 oder 4, wobei das Erzeugen der mehreren Auswertesignale, welche durch eine Positionsänderung des mobilen Endgeräts (10) veränderbar sind, aus den mehreren erfassten Signalen, welche durch eine Positionsänderung des mobilen Endgeräts (10) veränderbar sind, zumindest einen der folgenden Schritte umfasst:
- Messen der Signalstärke eines oder mehrerer erfasster Signale, welche durch eine Positionsänderung des mobilen Endgeräts (10) veränderbar sind;
- Erfassen der zeitlichen Veränderung eines oder mehrerer erfasster Signale, welche durch eine Positionsänderung des mobilen Endgeräts (10) veränderbar sind.

6. Verfahren (100) nach einem der Ansprüche 3 bis 5, wobei die mehreren erfassten Signale, welche durch eine Positionsänderung des mobilen Endgeräts (10) veränderbar sind, ein Funksignal einer Kommunikationsverbindung zwischen dem mobilen Endgerät (10) und dem Fahrzeug (12) umfassen.

7. Verfahren (100) nach einem der Ansprüche 3 bis 6, wobei die mehreren erfassten Signale, welche durch eine Positionsänderung des mobilen Endgeräts (10) veränderbar sind, ferner ein zur Ortung des mobilen Endgeräts (10) mittels eines globalen Navigationssatellitensystems geeignetes Signal oder ein von dem mobilen Endgerät (10) gemessenes und von dem Erdmagnetfeld abhängiges Signal umfassen.

8. Verfahren (100) nach einem der vorhergehenden Ansprüche, ferner umfassend:
- Erfassen einer Bewegung des mobilen Endgeräts (10) mittels eines Beschleunigungssensors (18) des mobilen Endgeräts (10);
wobei die mehreren bereitgestellten Auswertesignale, welche durch eine Positionsänderung des mobilen Endgeräts (10) veränderbar sind, ein die Bewegung des mobilen Endgeräts (10) betreffendes Signal umfassen.

9. Verfahren (100) nach einem der vorhergehenden Ansprüche, ferner umfassend:
- Bereitstellen von einem oder mehreren Auswertesignalen, welche durch eine Positionsänderung des Fahrzeugs (12) veränderbar sind.

10. Verfahren (100) nach Anspruch 9, wobei das Bereitstellen des einen oder der mehreren Auswertesignale, welche durch eine Positionsänderung des Fahrzeugs (12) veränderbar sind, zumindest einen der folgenden Schritte umfasst:
- Erfassen von einem oder mehreren Signalen, welche durch eine Positionsänderung des Fahrzeugs (12) veränderbar sind;
- Erzeugen von einem oder mehreren Auswertesignalen, welche durch eine Positionsänderung des Fahrzeugs (12) veränderbar sind, aus dem einen oder den mehreren erfassten Signalen, welche durch eine Positionsänderung des Fahrzeugs (12) veränderbar sind;
- Erfassen einer Bewegung des Fahrzeugs (12), vorzugsweise mittels eines Beschleunigungssensors (24) des Fahrzeugs (12);
wobei das eine oder die mehreren bereitgestellten Auswertesignale, welche durch eine Positionsänderung des Fahrzeugs (12) veränderbar sind, ein die Bewegung des Fahrzeugs (12) betreffendes Signal umfassen.

11. Verfahren (100) nach Anspruch 10, wobei das Erzeugen des einen oder der mehreren Auswertesignale, welche durch eine Positionsänderung des Fahrzeugs (12) veränderbar sind, aus dem einen oder den mehreren erfassten Signalen, welche durch eine Positionsänderung des Fahrzeugs (12) veränderbar sind, zumindest einen der folgenden Schritte umfasst:
- Messen der Signalstärke eines oder mehrerer erfasster Signale, welche durch eine Positionsänderung des Fahrzeugs (12) veränderbar sind;
- Erfassen der zeitlichen Veränderung eines oder mehrerer erfasster Signale, welche durch eine Positionsänderung des Fahrzeugs (12) veränderbar sind.

12. Verfahren (100) nach einem der vorhergehenden Ansprüche, wobei das Auswerten (130) der mehreren bereitgestellten Auswertesignale einen, mehrere oder sämtliche der folgenden Schritte umfasst:
- Vergleichen der zeitlichen Veränderung der Beschleunigungsamplitude des mobilen Endgeräts (10) und des Fahrzeugs (12);
- Vergleichen von Bewegungsprofilen des mobilen Endgeräts (10) und des Fahrzeugs (12);
- Erfassen eines Zeitpunkts, zu welchem eine Tür des Fahrzeugs (12) geschlossen wird;
- Vergleichen von Beschleunigungsprofilen des mobilen Endgeräts (10) und des Fahrzeugs (12), welche vorzugsweise Beschleunigungsinformationen des mobilen Endgeräts (10) und des Fahrzeugs (12) aus einer Zeitspanne umfassen, in welcher auch der Zeitpunkts, zu welchem die Tür des Fahrzeugs (12) geschlossen worden ist, liegt.

13. Verfahren (100) nach einem der vorhergehenden Ansprüche, wobei die mehreren erfassten Signale, welche durch eine Positionsänderung des mobilen Endgeräts (10) veränderbar sind, ferner ein Akustiksignal umfassen, welches von dem mobilen Endgerät (10) mittels eines Mikrofons aufgenommen und somit erzeugt wurde, und/oder ein Akustiksignal umfassen, welches von dem Fahrzeug (12) mittels eines Mikrofons aufgenommen und somit erzeugt wurde.

14. Verfahren (100) nach einem der vorhergehenden Ansprüche, ferner umfassend zumindest einen der folgenden Schritte:
- Erzeugen von Schwingungen durch das mobile Endgerät (10);
- Erzeugen von Schwingungen durch das Fahrzeug (12);
wobei die mehreren erfassten Signale, welche durch eine Positionsänderung des mobilen Endgeräts (10) veränderbar sind, ein Schwingungssignal umfassen, welches von dem mobilen Endgerät (10) erzeugt wurde, und/oder ein Schwingungssignal umfassen, welches von dem Fahrzeug (12) erzeugt wurde.

15. System (34) zum Erfassen einer Relativposition eines mobilen Endgeräts (10) in Bezug auf ein Fahrzeug (12), mit
- einem mobilen Endgerät (10); und
- einem Fahrzeug (12);
wobei das System (34) dazu eingerichtet ist, das Verfahren (100) zum Erfassen einer Relativposition des mobilen Endgeräts (10) in Bezug auf das Fahrzeug (12) gemäß einem der vorstehenden Ansprüche auszuführen.

## Claims

1. Method (100) for detecting a position of a mobile terminal (10) relative to a vehicle (12), comprising the steps of:
- providing (110), by means of the mobile terminal (10), multiple evaluation signals which can be changed and are changed by changing the position of the mobile terminal (10), wherein the multiple evaluation signals are provided on the basis of sensor signals from multiple sensors of the mobile terminal, wherein at least one of the multiple evaluation signals is based on the measurement of a signal strength of one or more detected mobile radio signals by means of the mobile terminal (10);
- determining (120) an event at the vehicle (12); and
- evaluating (130) the multiple provided evaluation signals for detecting the position of the mobile terminal (10) relative to the vehicle (12) in response to detecting (120) the event at the vehicle (12) in order to determine whether the mobile terminal (10) is inside the vehicle (12).

2. Method (100) according to claim 1, wherein the event at the vehicle (12) is one of the following events:
- opening or closing a door, a hatch, a window or another opening of the vehicle (12);
- actuating a locking device of the vehicle (12);
- actuating an ignition lock of the vehicle (12); or
- actuating a starter device of the vehicle (12).

3. Method (100) according to claim 1 or 2, wherein providing (110) the multiple evaluation signals which can be changed by changing the position of the mobile terminal (10) comprises the following steps:
- detecting multiple signals which can be changed by changing the position of the mobile terminal (10); and
- generating the multiple evaluation signals which can be changed by changing the position of the mobile terminal (10) from the multiple detected signals which can be changed by changing the position of the mobile terminal (10).

4. Method (100) according to claim 3, wherein the generated evaluation signals are temporarily stored in a ring buffer, and wherein only signal data from a selected time period are temporarily stored for evaluation.

5. Method (100) according to claim 3 or 4, wherein generating the multiple evaluation signals which can be changed by changing the position of the mobile terminal (10) from the multiple detected signals which can be changed by changing the position of the mobile terminal (10) comprises at least one of the following steps:
- measuring the signal strength of one or more detected signals which can be changed by changing the position of the mobile terminal (10);
- detecting the change over time of one or more detected signals which can be changed by changing the position of the mobile terminal (10).

6. Method (100) according to any of claims 3 to 5, wherein the multiple detected signals which can be changed by changing the position of the mobile terminal (10) comprise a radio signal of a communication link between the mobile terminal (10) and the vehicle (12).

7. Method (100) according to any of claims 3 to 6, wherein the multiple detected signals which can be changed by changing the position of the mobile terminal (10) further comprise a signal suitable for locating the mobile terminal (10) by means of a global navigation satellite system or a signal measured by the mobile terminal (10) and dependent on the Earth's magnetic field.

8. Method (100) according to any of the preceding claims, further comprising:
- detecting movement of the mobile terminal (10) by means of an acceleration sensor (18) of the mobile terminal (10);
wherein the multiple provided evaluation signals which can be changed by changing the position of the mobile terminal (10) comprise a signal relating to the movement of the mobile terminal (10).

9. Method (100) according to any of the preceding claims, further comprising:
- providing one or more evaluation signals which can be changed by changing the position of the vehicle (12).

10. Method (100) according to claim 9, wherein providing the one or more evaluation signals which can be changed by changing the position of the vehicle (12) comprises at least one of the following steps:
- detecting one or more signals which can be changed by changing the position of the vehicle (12);
- generating one or more evaluation signals which can be changed by changing the position of the vehicle (12) from the one or more detected signals which can be changed by changing the position of the vehicle (12);
- detecting movement of the vehicle (12), preferably by means of an acceleration sensor (24) of the vehicle (12);
wherein the one or more provided evaluation signals which can be changed by changing the position of the vehicle (12) comprise a signal relating to the movement of the vehicle (12).

11. Method (100) according to claim 10, wherein generating the one or more evaluation signals which can be changed by changing the position of the vehicle (12) from the one or more detected signals which can be changed by changing the position of the vehicle (12) comprises at least one of the following steps:
- measuring the signal strength of one or more detected signals which can be changed by changing the position of the vehicle (12);
- detecting the change over time of one or more detected signals which can be changed by changing the position of the vehicle (12).

12. Method (100) according to any of the preceding claims, wherein evaluating (130) the multiple provided evaluation signals comprises one, multiple or all of the following steps:
- comparing the change over time of the acceleration amplitude of the mobile terminal (10) and the vehicle (12);
- comparing movement profiles of the mobile terminal (10) and the vehicle (12);
- detecting a time at which a door of the vehicle (12) is closed;
- comparing acceleration profiles of the mobile terminal (10) and the vehicle (12), which preferably comprise acceleration information for the mobile terminal (10) and the vehicle (12) from a time period which also includes the time at which the door of the vehicle (12) was closed.

13. Method (100) according to any of the preceding claims, wherein the multiple detected signals which can be changed by changing the position of the mobile terminal (10) further comprise an acoustic signal recorded by the mobile terminal (10) by means of a microphone and thus generated and/or an acoustic signal recorded by the vehicle (12) by means of a microphone and thus generated.

14. Method (100) according to any of the preceding claims, further comprising at least one of the following steps:
- generating vibrations by means of the mobile terminal (10);
- generating vibrations by means of the vehicle (12);
wherein the multiple detected signals which can be changed by changing the position of the mobile terminal (10) comprise a vibration signal generated by the mobile terminal (10) and/or a vibration signal generated by the vehicle (12).

15. System (34) for detecting a position of a mobile terminal (10) relative to a vehicle (12), comprising
- a mobile terminal (10); and
- a vehicle (12);
wherein the system (34) is configured to perform the method (100) for detecting a position of the mobile terminal (10) relative to the vehicle (12) according to any of the preceding claims.

## Revendications

1. Procédé (100) de détection d'une position relative d'un terminal mobile (10) par rapport à un véhicule (12), comportant les étapes de :
- fourniture (110), par le terminal mobile (10), de plusieurs signaux d'évaluation, qui peuvent être modifiés et sont modifiés par une modification de position du terminal mobile (10), dans lequel les plusieurs signaux d'évaluation sont fournis sur la base de signaux de capteurs de plusieurs capteurs du terminal mobile, dans lequel au moins l'un des plusieurs signaux d'évaluation est basé sur la mesure d'une intensité de signal d'un ou plusieurs signaux radio mobiles détectés par le terminal mobile (10) ;
- établissement (120) d'un événement au niveau du véhicule (12) ; et
- évaluation (130) des plusieurs signaux d'évaluation fournis pour détecter la position relative du terminal mobile (10) par rapport au véhicule (12) en réponse à l'établissement (120) de l'événement au niveau du véhicule (12) pour établir si le terminal mobile (10) se trouve à l'intérieur du véhicule (12).

2. Procédé (100) selon la revendication 1, dans lequel l'événement au niveau du véhicule (12) est l'un des événements suivants :
- une ouverture ou une fermeture d'une porte, d'un volet, d'une fenêtre ou d'une autre ouverture du véhicule (12) ;
- un actionnement d'un dispositif de verrouillage du véhicule (12) ;
- un actionnement d'une serrure de contact du véhicule (12) ; ou
- un actionnement d'un dispositif de démarrage du véhicule (12).

3. Procédé (100) selon la revendication 1 ou 2, dans lequel la fourniture (110) des plusieurs signaux d'évaluation, qui peuvent être modifiés par une modification de position du terminal mobile (10) comprend les étapes suivantes :
- détection de plusieurs signaux, qui peuvent être modifiés par une modification de position du terminal mobile (10) ; et
- génération des plusieurs signaux d'évaluation, qui peuvent être modifiés par une modification de position du terminal mobile (10), à partir des plusieurs signaux détectés, qui peuvent être modifiés par une modification de position du terminal mobile (10).

4. Procédé (100) selon la revendication 3, dans lequel les signaux d'évaluation générés sont stockés temporairement dans une mémoire annulaire, et dans lequel seules des données de signaux d'un intervalle de temps sélectionné sont stockées temporairement pour l'évaluation.

5. Procédé (100) selon la revendication 3 ou 4, dans lequel la génération des plusieurs signaux d'évaluation, qui peuvent être modifiés par une modification de position du terminal mobile (10), à partir des plusieurs signaux détectés, qui peuvent être modifiés par une modification de position du terminal mobile (10), comprend au moins une des étapes suivantes :
- mesure de l'intensité de signal d'un ou de plusieurs signaux détectés, qui peuvent être modifiés par une modification de position du terminal mobile (10) ;
- détection de la modification dans le temps d'un ou plusieurs signaux détectés qui peuvent être modifiés par une modification de position du terminal mobile (10).

6. Procédé (100) selon l'une des revendications 3 à 5, dans lequel les plusieurs signaux détectés, qui peuvent être modifiés par une modification de position du terminal mobile (10), comprennent un signal radio d'une liaison de communication entre le terminal mobile (10) et le véhicule (12).

7. Procédé (100) selon l'une des revendications 3 à 6, dans lequel les plusieurs signaux détectés, qui peuvent être modifiés par une modification de position du terminal mobile (10), comprennent en outre un signal adapté pour localiser le terminal mobile (10) par le biais d'un système de navigation par satellite mondial ou un signal mesuré par le terminal mobile (10) et dépendant du champ magnétique terrestre.

8. Procédé (100) selon l'une des revendications précédentes, comprenant en outre :
- détection d'un mouvement du terminal mobile (10) par le biais d'un capteur d'accélération (18) du terminal mobile (10) ;
dans lequel les plusieurs signaux d'évaluation fournis, qui peuvent être modifiés par une modification de position du terminal mobile (10), comprennent un signal concernant le mouvement du terminal mobile (10).

9. Procédé (100) selon l'une des revendications précédentes, comprenant en outre :
- fourniture d'un ou de plusieurs signaux d'évaluation qui peuvent être modifiés par une modification de position du véhicule (12).

10. Procédé (100) selon la revendication 9, dans lequel la fourniture des un ou plusieurs signaux d'évaluation qui peuvent être modifiés par une modification de position du véhicule (12) comprend au moins l'une des étapes suivantes :
- détection d'un ou de plusieurs signaux qui peuvent être modifiés par une modification de position du véhicule (12) ;
- génération d'un ou de plusieurs signaux d'évaluation, qui peuvent être modifiés par une modification de position du véhicule (12), à partir des un ou plusieurs signaux détectés, qui peuvent être modifiés par une modification de position du véhicule (12) ;
- détection d'un mouvement du véhicule (12), de préférence par le biais d'un capteur d'accélération (24) du véhicule (12) ;
dans lequel le ou les plusieurs signaux d'évaluation fournis, qui peuvent être modifiés par une modification de position du véhicule (12), comprennent un signal concernant le mouvement du véhicule (12).

11. Procédé (100) selon la revendication 10, dans lequel la génération des un ou plusieurs signaux d'évaluation qui peuvent être modifiés par une modification de position du véhicule (12) à partir des un ou plusieurs signaux détectés qui peuvent être modifiés par une modification de position du véhicule (12) comprend au moins l'une des étapes suivantes :
- mesure de l'intensité de signal d'un ou de plusieurs signaux détectés qui peuvent être modifiés par une modification de position du véhicule (12) ;
- détection de la modification dans le temps d'un ou de plusieurs signaux détectés qui peuvent être modifiés par une modification de position du véhicule (12).

12. Procédé (100) selon l'une des revendications précédentes, dans lequel l'évaluation (130) des plusieurs signaux d'évaluation fournis comprend une, plusieurs ou la totalité des étapes suivantes :
- comparaison de la modification dans le temps de l'amplitude d'accélération du terminal mobile (10) et du véhicule (12) ;
- comparaison des profils de mouvement du terminal mobile (10) et du véhicule (12) ;
- détection d'un moment auquel une porte du véhicule (12) est fermée ;
- comparaison de profils d'accélération du terminal mobile (10) et du véhicule (12), qui comprennent de préférence des informations d'accélération du terminal mobile (10) et du véhicule (12) à partir d'une période de temps dans laquelle se trouve également le moment où la porte du véhicule (12) a été fermée.

13. Procédé (100) selon l'une des revendications précédentes, dans lequel les plusieurs signaux détectés, qui peuvent être modifiés par une modification de position du terminal mobile (10), comprennent en outre un signal acoustique qui a été capté par le terminal mobile (10) par le biais d'un microphone et ainsi généré, et/ou un signal acoustique qui a été capté par le véhicule (12) par le biais d'un microphone et ainsi généré.

14. Procédé (100) selon l'une des revendications précédentes, comprenant en outre au moins l'une des étapes suivantes :
- génération de vibrations par le terminal mobile (10) ;
- génération de vibrations par le véhicule (12) ;
dans lequel les plusieurs signaux détectés, qui peuvent être modifiés par une modification de position du terminal mobile (10), comprennent un signal de vibration qui a été généré par le terminal mobile (10) et/ou un signal de vibration, qui a été généré par le véhicule (12).

15. Système (34) de détection d'une position relative d'un terminal mobile (10) par rapport à un véhicule (12), comportant
- un terminal mobile (10) ; et
- un véhicule (12) ;
dans lequel le système (34) est conçu pour mettre en œuvre le procédé (100) de détection d'une position relative du terminal mobile (10) par rapport au véhicule (12) selon l'une des revendications précédentes.
